(19) Europäisches Patentamt
European Patent Office
Office européen des brevets

(11) **EP 4 606 825 A1**

(12) **EUROPEAN PATENT APPLICATION**
published in accordance with Art. 153(4) EPC

(43) Date of publication:
**27.08.2025 Bulletin 2025/35**

(21) Application number: **23879678.3**

(22) Date of filing: **11.10.2023**

(51) International Patent Classification (IPC):
**C08F 8/28** (2006.01)  **C08J 5/18** (2006.01)
**C08L 29/14** (2006.01)

(52) Cooperative Patent Classification (CPC):
**C08F 8/28; C08J 5/18; C08L 29/14**

(86) International application number:
**PCT/JP2023/036889**

(87) International publication number:
**WO 2024/085035 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.10.2022  JP 2022166255**

(71) Applicant: **Kuraray Co., Ltd.**
**Kurashiki-shi, Okayama 710-0801 (JP)**

(72) Inventors:
• **HIRAOKA, Nobutaka**
**Tsukuba-shi, Ibaraki 305-0841 (JP)**
• **SASAKI, Ryota**
**Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **ACETALIZATION PRODUCT OF ETHYLENEVINYL ALCOHOL COPOLYMER, COMPOSITION CONTAINING SAID ACETALIZATION PRODUCT, AND BARRIER MATERIAL**

(57)　The present invention relates to an acetalization product of ethylenevinyl alcohol copolymer, comprising:
an ethylene unit at from 20% to 80% by mole; and
a vinyl alcohol unit at from 4% to 76% by mole,
with reference to all monomeric units constituting the acetalization product,
the acetalization product having a degree of acetalization of from 3% to 80% by mole, satisfying Formula (1):

$$0.71 \leq W_{0.05h}/2f \leq 1.09 \quad (1)$$

[in Formula (1), $W_{0.05h}/2f$ represents a symmetry factor determined by reversed-phase partition gradient high-performance liquid chromatography analysis using a water-ethanol eluant in accordance with JIS K 0124: 2011] and
Formula (2):

$$1.20 \leq Tm/Tg \leq 1.35 \quad (2)$$

[in Formula (2), Tm and Tg represent a melting peak temperature (Kelvin) and a midpoint glass transition temperature (Kelvin), respectively, measured in accordance with JIS K7121: 2012], and having an oxygen permeation rate of 150 cc·20 $\mu$m/m$^2$·day·atm or less at 20°C and 65%RH.

EP 4 606 825 A1

**Description**

TECHNICAL FIELD

This application claims benefit of priority to Japanese Patent Application 2022-166255, filed October 17, 2022, the entire content of which is incorporated herein by reference.

The present invention relates to an acetalization product of ethylenevinyl alcohol copolymer and a production method thereof, a composition containing the acetalization product, a resin film comprising a layer containing the acetalization product, a resin film comprising a layer containing the composition, a barrier material consisting of the resin film, and a molded body consisting of the resin film.

BACKGROUND ART

Ethylenevinyl alcohol copolymer (hereinafter sometimes abbreviated as EVOH) is excellent in transparency and gas barrier properties, but has the drawback of lacking in stretchability and flexibility. To overcome this drawback, a method is known in which EVOH is blended with a flexible resin such as an ethylenevinyl acetate copolymer or an ethylene propylene copolymer. However, this method has the drawback of significantly reducing heat resistance or transparency.

Patent Document 1 discloses an ethylenevinyl alcohol copolymer modified with a monofunctional epoxy compound (e.g., 1,2-epoxybutane or epoxypropane) having a molecular weight of 500 or less, and describes that the modified ethylenevinyl alcohol copolymer is excellent in barrier properties, transparency, stretchability, flexibility, and bending resistance. Patent Document 2 discloses an ethylene-vinyl alcohol-vinyl acetal copolymer having an excellent combination of hot water resistance and oxygen barrier properties, and a packaging material formed with an olefin-vinyl alcohol-vinyl acetal copolymer and having an excellent combination of hot water resistance and oxygen barrier properties.

PRIOR ART DOCUMENTS

PATENT DOCUMENTS

Patent Document 1: JP-A-2006-233222
Patent Document 2: JP-B-55-46642

SUMMARY OF THE INVENTION

PROBLEMS TO BE SOLVED BY THE INVENTION

However, according to the studies of the present inventors, it has been found that in the above-mentioned conventional techniques, the barrier properties, transparency, stretchability, flexibility, and heat resistance of films comprising the copolymers are not necessarily sufficient, and there is room for improvement.

Therefore, an object of the present invention is to provide an acetalization product of ethylenevinyl alcohol copolymer which can form a resin film that is excellent in all of barrier properties, transparency, stretchability, flexibility, and heat resistance.

SOLUTIONS TO THE PROBLEMS

In order to solve this object, the present inventors conducted intensive studies, which led to the present invention. In other words, the present invention encompasses the following preferred aspects.

[1] An acetalization product of ethylenevinyl alcohol copolymer, comprising:

an ethylene unit at from 20% to 80% by mole; and
a vinyl alcohol unit at from 4% to 76% by mole,
with reference to all monomeric units constituting the acetalization product,
the acetalization product having a degree of acetalization of from 3% to 80% by mole, satisfying
Formula (1):

$$0.71 \leq W_{0.05h}/2f \leq 1.09 \qquad (1)$$

[in Formula (1), $W_{0.05h}/2f$ represents a symmetry factor determined by reversed-phase partition gradient high-performance liquid chromatography analysis using a water-ethanol eluant in accordance with JIS K 0124: 2011] and
Formula (2):

$$1.20 \leq Tm/Tg \leq 1.35 \qquad (2)$$

[in Formula (2), Tm and Tg represent a melting peak temperature (Kelvin) and a midpoint glass transition temperature (Kelvin), respectively, measured in accordance with JIS K7121: 2012], and having an oxygen transmission rate of 150 cc·20 $\mu$m/m$^2$·day·atm or less at 20°C and 65%RH.

[2] The acetalization product according to [1], which satisfies Formula (3):

{$\Delta$H (J/g) $\times$ Tm (Kelvin) $\times$ Vinyl alcohol unit amount (mol%)/100}/(Oxygen transmission rate at 20°C and 65%RH) $\geq$ 30 (3).

[3] The acetalization product according to [1] or [2], wherein the acetalization product has a degree of acetalization of 40% by mole or less.
[4] The acetalization product according to any one of [1] to [3], wherein the acetalization product has a melting peak temperature Tm measured in accordance with JIS K7121: 2012 of 136°C or more.
[5] The acetalization product according to any one of [1] to [4], wherein the acetalization product has a tensile modulus measured at 23°C and 50%RH of 2000 MPa or less.
[6] A composition comprising:

(A) the acetalization product according to any one of [1] to [5]; and
(B) one or more resins selected from the group consisting of (B-1) an acetalization product of ethylenevinyl alcohol copolymer other than (A), (B-2) an ethylenevinyl alcohol copolymer, and (B-3) a resin other than (B-1) and (B-2).

[7] A method of producing the acetalization product according to any one of [1] to [5], comprising:

(i) a step of preparing a dispersion liquid containing an ethylenevinyl alcohol copolymer, an aldehyde, and a solvent and impregnating at least a portion of the aldehyde into the ethylenevinyl alcohol copolymer; and
(ii) a step of adding a catalyst to the dispersion liquid, thereby acetalizing the ethylenevinyl alcohol copolymer after step (i),

wherein the acetalization is carried out by a solid-liquid reaction.
[8] A resin film comprising one or more layers containing the acetalization product according to any one of [1] to [5].
[9] A resin film comprising one or more layers containing the composition according to [6].
[10] The resin film according to [8], further comprising one or more layers containing one or more resins selected from the group consisting of a polyolefin, a polyamide, a polyester, and a polyurethane.
[11] The resin film according to [9], further comprising one or more layers containing one or more resins selected from the group consisting of a polyolefin, a polyamide, a polyester, and a polyurethane.
[12] A barrier material comprising the resin film according to any one of [8] to [11].
[13] A molded body comprising the resin film according to any one of [8] to [11].

EFFECTS OF THE INVENTION

According to the present invention, an acetalization product of ethylenevinyl alcohol copolymer which can form a resin film that is excellent in all of barrier properties, transparency, stretchability, flexibility, and heat resistance can be provided.

BRIEF DESCRIPTION OF THE DRAWINGS

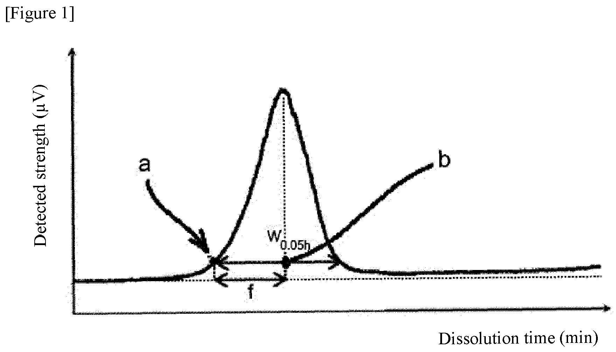

Fig. 1 shows an example of the measurement results of high performance liquid chromatography (HPLC) for explaining the symmetry factor.

DETAILED DESCRIPTION

Hereinafter, embodiments of the present invention will be described in detail. The scope of the present invention is not limited to the embodiments described herein, and various modifications can be made without departing from the spirit of the present invention. Furthermore, when a plurality of upper and lower limit values are listed for a particular parameter or the like, any of these upper and lower limit values can be combined to create a suitable numerical range.

[Acetalization Product of Ethylenevinyl Alcohol Copolymer]

The acetalization product of the present invention of ethylenevinyl alcohol copolymer (hereinafter also simply referred to as "acetalization product") satisfies the following Formulas (1) and (2):

$$0.71 \leq W_{0.05h}/2f \leq 1.09 \qquad (1)$$

[in Formula (1), $W_{0.05h}/2f$ represents a symmetry factor determined by reversed-phase partition gradient high-performance liquid chromatography analysis using a water-ethanol eluant in accordance with JIS K 0124: 2011]

$$1.20 \leq Tm/Tg \leq 1.35 \qquad (2)$$

[in Formula (2), Tm and Tg represent a melting peak temperature (Kelvin) and a midpoint glass transition temperature (Kelvin), respectively, measured in accordance with JIS K7121: 2012], and has an oxygen transmission rate of 150 cc·20 $\mu m/m^2$·day·atm or less at 20°C and 65%RH.

The present inventors have found that as a result of preparing an acetalization product of ethylenevinyl alcohol copolymer that satisfies both Formulas (1) and (2) above and has an oxygen transmission rate at 20°C and 65%RH of 150 cc·20 $\mu m/m^2$·day·atm or less, a resin film (resin sheet) comprising the acetalization product becomes surprisingly excellent in all of barrier properties, transparency, stretchability, flexibility, and heat resistance.

Since the symmetry factor $W_{0.05h}/2f$ of the acetalization product of the present invention, which is determined in accordance with JIS K 0124: 2011, is from 0.71 to 1.09, the resulting resin film tends to have high transparency. This is considered to be because, by setting the symmetry factor within the above-described range, an appropriate distribution of the degree of acetalization is imparted to the acetalization product. Meanwhile, when the symmetry factor is outside the above-described range, the resulting acetalization product tends to vary greatly in degree of acetalization and to have a reduced transparency. In addition, when the symmetry factor exceeds the upper limit described above, the proportion of an acetalization product having a high degree of acetalization (component having a high degree of acetalization) in the resulting acetalization product increases, and transparency is likely to decrease. When the symmetry factor is less than the lower limit described above, the proportion of an acetalization product having a low degree of acetalization (component having a low degree of acetalization) in the resulting acetalization product increases, and transparency and moldability tend to decrease.

The symmetry factor is preferably 1.05 or less, more preferably 1.00 or less, still more preferably 0.95 or less, even more preferably 0.92 or less, and particularly preferably 0.90 or less from the viewpoint of easily improving transparency and moldability. In addition, the symmetry factor is preferably 0.73 or more, more preferably 0.75 or more, still more preferably 0.77 or more, even more preferably 0.79 or more, and particularly preferably 0.80 or more from the viewpoint of easily improving transparency and moldability. Here, the symmetry factor is a factor that indicates the degree of symmetry of a measured peak obtained using high performance liquid chromatography, and the closer the symmetry factor is to 1.0, the higher the symmetry of the peak.

The symmetry factor $W_{0.05h}/2f$ can be determined by performing reversed-phase partition gradient high-performance liquid chromatography analysis using a water-ethanol eluant in accordance with JIS K 0124: 2011. In the symmetry factor, "$W_{0.05h}$" represents the peak width at a height (5% peak height position) that is 1/20 of the peak height from the baseline of the measured peak obtained by HPLC analysis, and "f" represents the distance on the rising side of the peak when the peak width at the 5% peak height position is bisected by a perpendicular line including the peak apex. Specifically, in the measured peak in Fig. 1, which is an example of the measurement results of high performance liquid chromatography (HPLC), "$W_{0.05h}$" represents the peak width $W_{0.05h}$ shown in Fig. 1, and "f" represents the distance f between a-b shown in Fig. 1. In Fig. 1, "a" is the starting point at the 5% height position of the peak, and "b" is the intersection point of a horizontal line including the peak starting point "a" and a vertical line including the peak apex. In Fig. 1, the dotted line parallel to the horizontal axis represents the baseline.

The above-described HPLC analysis can usually be carried out under the following measurement conditions.

Sample concentration: 1.5 mg/1g

Sample solvent: Ethanol (99.5%)/ion-exchanged water = 9/1 wt% mixed solvent

Injection volume: 20 $\mu$L

Detector: Varian 380-LC; EVAP: 80°C (preheating); NEB: 50°C (second heating); Gas: 1.5 (SLM); data capture interval: 1000 milliseconds; filter: 1 $\mu$m

ODS silica column: "Shim-pack G-ODS (octadecyl-modified spherical fully porous silica gel, inner diameter 4 mm $\times$ length 10 mm, particle size 5 $\mu$m)" manufactured by SHIMADZU CORPORATION

Column temperature: 45°C

Liquid delivery flow rate: Total flow rate of 0.4 mL/min

The HPLC analysis of the present invention can be carried out according to the following procedures. Liquids with different polarities are used for the mobile phase. Water is used as mobile phase A, and ethanol (99.5%) is used as mobile phase B. Before the sample is injected, the inside of the column of the HPLC system is filled with a mixed solvent of mobile phase A/mobile phase B in a volume ratio of 95/5. In this state, the sample is injected. Then, the solvent is allowed to flow under the following conditions.

0 to 5 min (concentration B; _5% constant)

5 to 25 min (concentration B; _5% to 100%)

25 to 30 min (concentration B; _100% constant)

30 to 31 min (concentration B; _100% to 5%)

31 to 55 min (concentration B; _5% constant)

The symmetry factor can be adjusted by appropriately adjusting the distribution of the degree of acetalization in the acetalization product and/or the production conditions of the acetalization product. For example, the symmetry factor may be adjusted within the above-described range by selecting the method of producing an acetalization product of ethylenevinyl alcohol copolymer described later, in particular, the acetalization method or the like described later as a preferred aspect.

Since the ratio Tm/Tg of the melting peak temperature (Kelvin) and the midpoint glass transition temperature (Kelvin) measured in accordance with JIS K7121: 2012 is from 1.20 to 1.35 for the acetalization product of the present invention, the transparency of the resulting resin film can be maintained while ensuring flexibility and heat resistance. This is considered to be because although, in general, the higher the crystallinity, the better the heat resistance, but the lower the flexibility and transparency, while by setting the Tm/Tg of the acetalization product within the above range, the acetalization product is imparted with appropriate crystallinity that can achieve transparency, flexibility, and heat resistance simultaneously. On the other hand, when Tm/Tg (K/K) exceeds the above-described upper limit, transparency tends to decrease, while when Tm/Tg (K/K) is less than the above-described lower limit, heat resistance tends to decrease.

From the viewpoint of easily improving transparency, the Tm/Tg (K/K) is preferably 1.34 or less, more preferably 1.33 or less, and still more preferably 1.32 or less. From the viewpoint of easily improving heat resistance, the Tm/Tg (K/K) is preferably 1.22 or more and more preferably 1.25 or more. The Tm/Tg (K/K) can be determined by measuring the melting peak temperature (Kelvin) and the midpoint glass transition temperature (Kelvin) using a Differential Scanning Calorimeter (DSC) in accordance with JIS K7121: 2012. Alternatively, it may be determined by measuring the melting peak temperature Tm (°C) and the midpoint glass transition temperature Tg (°C) and converting these values to Kelvin (K) or by, for example, the method described in Examples.

The melting peak temperature Tm (°C) of the acetalization product of the present invention measured in accordance with JIS K7121: 2012 is preferably 136°C or more, more preferably 138°C or more, still more preferably 140°C or more, even more preferably 142°C or more, and particularly preferably 145°C or more, and it is preferably 180°C or less, more preferably 175°C or less, still more preferably 170°C or less, and even more preferably 165°C. When the melting peak temperature Tm is equal to or higher than the lower limit, heat resistance such as retort resistance is easily improved, whereas when the melting peak temperature Tm is equal to or lower than the upper limit, transparency and moldability are easily improved.

The midpoint glass transition temperature Tg (°C) of the acetalization product of the present invention measured in accordance with JIS K7121: 2012 is preferably 20°C or more, more preferably 30°C or more, and still more preferably 40°C or more, and it is preferably 80°C or less, more preferably 60°C or less, and still more preferably 50°C or less. When the midpoint glass transition temperature Tg is equal to or more than the above-described lower limit, moldability (e.g., film-forming property) is easily improved, and when it is equal to or less than the above-described upper limit, the flexibility of the resulting resin film is easily improved.

The Tm/Tg (K/K) can be adjusted by appropriately adjusting the distribution of the degree of acetalization in the acetalization product and/or production conditions and the like of the acetalization product. For example, the Tm/Tg (K/K) may be adjusted within the above-described range by selecting the method of producing an acetalization product of ethylenevinyl alcohol copolymer described later, in particular, the acetalization method or the like described later as a preferred aspect.

The ethylene unit content in the acetalization product of the present invention is from 20% to 80% by mole with respect to all monomeric units constituting the acetalization product. When the ethylene unit content is within the above-described range, the flexibility and barrier properties of the resulting resin film and the molding processability of the acetalization product are easily improved.

The ethylene unit content may be preferably 25% by mole or more, more preferably 27% by mole or more, still more preferably 30% by mole or more, and even more preferably 32% by mole or more from the viewpoint of easily improving the flexibility, barrier properties, and transparency of the resulting resin film as well as the molding processability of the acetalization product, or may be preferably 60% by mole or less, more preferably 55% by mole or less, still more preferably 50% by mole or less, even more preferably 48% by mole or less, particularly preferably 46% by mole or less, and more particularly preferably 44% by mole or less from the viewpoint of easily improving heat resistance.

The vinyl alcohol unit content in the acetalization product of the present invention is from 4% to 76% by mole with respect to all monomeric units constituting the acetalization product. When the vinyl alcohol unit content is within the above-described range, the transparency and barrier properties of the resulting resin film are easily improved.

The vinyl alcohol unit content with respect to all monomeric units constituting the acetalization product may be preferably 10% by mole or more, more preferably 20% by mole or more, still more preferably 25% by mole or more, even more preferably 30% by mole or more, particularly preferably 33% by mole or more, more particularly preferably 36% by mole or more, still more particularly preferably 38% by mole or more, and even more particularly preferably 40% by mole or more from the viewpoint of easily improving barrier properties, or may be preferably 75% by mole or less, more preferably 70% by mole or less, still more preferably 65% by mole or less, particularly preferably 60% by mole or less, and more particularly preferably 58% by mole or less from the viewpoint of easily improving the transparency of the resulting acetalization product.

The acetal unit (acetalized vinyl alcohol unit) content in the acetalization product of the present invention with respect to all monomeric units constituting the acetalization product may be preferably 1% by mole or more, more preferably 1.5% by mole or more, still more preferably 2.5% by mole or more, even more preferably 3% by mole or more, particularly preferably 4% by mole or more, more particularly preferably 5% by mole or more, and still more particularly preferably 7% by mole or more from the viewpoint of keeping the crystallinity of the acetalization product low, thereby making it easier to increase flexibility and transparency, or may be preferably 70% by mole or less, more preferably 60% by mole or less, still more preferably 50% by mole or less, even more preferably 40% by mole or less, particularly preferably 30% by mole or less, more particularly preferably 25% by mole or less, and still more particularly preferably 20% by mole or less from the viewpoint of easily improving heat resistance and barrier properties (gas barrier properties).

The acetalization product of the present invention may contain vinyl ester units such as vinyl acetate units. The vinyl ester unit content may be preferably from 0% to 5% by mole, more preferably from 0% to 2% by mole, and still more preferably from 0% to 1% by mole from the viewpoint of thermal decomposition resistance.

The acetalization product of the present invention may contain other monomeric units, in addition to ethylene units, vinyl alcohol units, and acetal units, as well as optionally contained vinyl ester units within a range that does not impair the effects of the present invention. Examples of other monomeric units include: α-olefins such as propylene, isobutylene, α-octene, and α-dodecene; unsaturated acids such as acrylic acid, methacrylic acid, methyl methacrylate, crotonic acid, maleic acid, itaconic acid, or anhydrides, salts or mono- or dialkyl esters thereof; nitriles such as acrylonitrile and methacrylonitrile; amides such as acrylamide and methacrylamide; olefin sulfonic acids such as ethylene sulfonic acid, allyl sulfonic acid, and methallylsulfonic acid, or salts thereof; alkyl vinyl ethers, vinyl ketones, N-vinylpyrrolidone, vinyl chloride, and vinylidene chloride. In a case in which the ethylenevinyl alcohol copolymer contains other monomeric units, the content thereof may be preferably 15% by mole or less, and more preferably 10% by mole or less.

Each unit content in the acetalization product can be determined by NMR measurement, for example, by the method described in Examples.

The degree of acetalization of the acetalization product is from 3% to 80% by mole. When the degree of acetalization is within the above-described range, the transparency, flexibility, heat resistance, and barrier properties of the resulting resin film are easily improved. The degree of acetalization may be preferably 4% by mole or more, more preferably 5% by mole or more, still more preferably 7% by mole or more, and even more preferably 10% by mole or more from the viewpoint of keeping the crystallinity of the acetalization product low, and making it easier to increase flexibility and transparency, or may be preferably 70% by mole or less, more preferably 62% by mole or less, still more preferably 60% by mole or less, even more preferably 50% by mole or less, particularly preferably 40% by mole or less, and more particularly preferably 35% by mole or less (e.g., 30% by mole or less, 28% by mole or less, 26% by mole or less, 24% by mole or less, 22% by mole or less, less than 22% by mole, 20% by mole or less, 18% by mole or less, 16% by mole or less, or less than 16% by mole) from the viewpoint of improving heat resistance and barrier properties.

The degree of acetalization in the present invention refers to the proportion of acetal units with respect to the total content of acetal units, vinyl alcohol units, and vinyl ester units such as vinyl acetate units in the acetalization product. Specifically, the degree of acetalization in the present invention can be calculated by the following Formula, given that the acetal unit content is k, the vinyl alcohol unit content is l, and the vinyl ester unit content is m:

$$\text{Degree of acetalization (\% by mole)} = \{k/(k + l + m)\} \times 100.$$

The oxygen transmission rate (hereinafter sometimes referred to as "OTR") of the acetalization product at 20°C and 65%RH is 150 cc·20 $\mu$m/m$^2$·day·atm or less. When the above-described oxygen transmission rate is 150 cc·20 $\mu$m/m$^2$·day·atm or less, it indicates that the resulting resin film has high barrier properties against gases (particularly oxygen). The oxygen transmission rate is preferably 120 cc·20 $\mu$m/m$^2$·day·atm or less, more preferably 100 cc·20 $\mu$m/m$^2$·day·atm or less, still more preferably 75 cc·20 $\mu$m/m$^2$·day·atm or less, even more preferably 50 cc·20 $\mu$m/m$^2$·day·atm or less, particularly preferably 40 cc·20 $\mu$m/m$^2$·day·atm or less, more particularly preferably 35 cc·20 $\mu$m/m$^2$·day·atm or less, and still more particularly preferably 30 cc·20 $\mu$m/m$^2$·day·atm or less. The lower limit of the oxygen transmission rate is not particularly limited, and may be, for example, 0 cc·20 $\mu$m/m$^2$·day·atm or more.

The oxygen transmission rate at 20°C and 65%RH can be adjusted by appropriately adjusting production conditions and the like of the acetalization product. For example, the oxygen transmission rate may be adjusted to the above-described upper limit or less by selecting the method of producing an acetalization product of ethylenevinyl alcohol copolymer described later, in particular, the acetalization method or the like described later as a preferred aspect.

The oxygen transmission rate at 20°C and 65%RH can be measured by an oxygen transmission measuring device, for example, by the method described in Examples below.

In one embodiment of the present invention, it is preferable that the acetalization product of the present invention satisfies the following Formula (3) from the viewpoint of easily improving the properties, in particular, the heat resistance and barrier properties of the resulting resin film:

$$\{\Delta H \text{ (J/g)} \times Tm \text{ (Kelvin)} \times \text{Vinyl alcohol unit amount (mol\%)}/100\}/OTR(cc·20 \ \mu m/m^2·day·atm) \geq 30 \text{ (3)}. \quad (3).$$

In Formula (3), $\Delta H$ refers to the crystal melting heat quantity of the acetalization product measured in accordance with JIS K7121: 2012. More specifically, it is the crystal melting heat quantity measured using DSC when the acetalization product is heated from 25°C to 140°C at a heating rate of 10°C/min, held at 140°C for 30 minutes, cooled from 140°C to -30°C at a cooling rate of 4°C/min, and then heated again from -30°C to 200°C at a heating rate of 10°C/min.

The vinyl alcohol unit amount can be determined by NMR measurement, for example, by the method described in Examples.

From the viewpoint of more easily improving the properties of the resulting resin film, the above-described value of $\{\Delta H \times Tm \times$ vinyl alcohol unit amount/100$\}$/OTR is preferably 50 or more, more preferably 70 or more, and still more preferably 100 or more (e.g., 150 or more, 250 or more). It is unclear why when the above-described value of $\{\Delta H \times$ vinyl alcohol unit amount/100$\}$/OTR is equal to or more than the above-described lower limit, the properties, in particular, the heat resistance and barrier properties of the resulting resin film are easily improved, and it is not limited to the following reasons. However, this is considered to be because the acetalization product has an appropriate crystal structure that provides heat resistance and barrier properties. The upper limit of the above-described $\{\Delta H \times Tm \times$ vinyl alcohol unit amount/100$\}$/OTR is not particularly limited, but it is usually 10000 or less.

The above-described value of $\{\Delta H \times Tm \times$ vinyl alcohol unit amount/100$\}$/OTR can be adjusted by appropriately adjusting production conditions and the like of the acetalization product. For example, for the above-described value of $\{\Delta H \times Tm \times$ vinyl alcohol unit amount/100$\}$/OTR, the above-described value $\{\Delta H \times Tm \times$ vinyl alcohol unit amount/100$\}$/OTR may be adjusted to equal to or more than the lower limit by selecting the method of producing an acetalization product of ethylenevinyl alcohol copolymer described later, in particular, the acetalization method described as a preferred aspect in the description below (especially an acetalization method employing a preferred specific surface area and/or a preferred average particle size and/or a preferred aldehyde impregnation time and/or a preferred acetalization reaction time and/or a preferred acetalization catalyst concentration of raw material EVOH) or the like.

The tensile modulus in tensile strength and elongation measurement at 23°C and 50%RH of the acetalization product is preferably 2000 MPa or less, more preferably 1800 MPa or less, and still more preferably 1600 MPa or less. The lower limit of the tensile modulus described above is not particularly limited, and is preferably 10 MPa or more, more preferably 100 MPa or more, still more preferably 300 MPa or more, even more preferably 500 MPa or more, particularly preferably 650 MPa or more, and more particularly preferably 800 MPa or more from the viewpoint of handling as a film.

The tensile elongation at break in tensile strength and elongation measurement at 23°C and 50%RH of the acetalization product is preferably 150% or more, more preferably 200% or more, still more preferably 250% or more, and particularly preferably 300% or more. The upper limit of the tensile elongation at break is not particularly limited, and is usually 1000% or less.

By using such an acetalization product, a flexible film or molded article can be obtained, and the film or molded article can be easily fabricated by stretching or thermoforming.

The above-described tensile modulus and tensile elongation at break can be measured by the methods described in Examples below.

The above-described tensile modulus and tensile elongation at break can be adjusted by appropriately adjusting production conditions and the like of the acetalization product. For example, the above-described tensile modulus and tensile elongation at break may be adjusted to the upper limit or less and the lower limit or more, respectively, by selecting the method of producing an acetalization product of ethylenevinyl alcohol copolymer described later, in particular, the acetalization method or the like described later as a preferred aspect.

In one embodiment of the present invention, from the viewpoint of easily reducing deterioration due to heat during molding processing of the acetalization product, the melt flow rate (MFR) of the acetalization product measured at 190°C and 2.16 Kg in accordance with JIS K7210:2014 may be preferably from 1 to 30 g/10 min, more preferably from 1.5 to 20 g/10 min, still more preferably from 2 to 10 g/10 min, and even more preferably from 2.5 to 9 g/10 min.

The acetalization product of the present invention exhibits a low oxygen transmission rate, a low tensile modulus, a high tensile elongation at break, and a high melting peak temperature, as described above. In addition, a resin film obtained from the acetalization product of the present invention exhibits values similar to those of the haze and stretchability of the resin film of the present invention described later in the section [Resin Film, Barrier Material, Molded Body]. Therefore, the acetalization product of the present invention can form a resin film that is excellent in all of the barrier properties, transparency, stretchability, flexibility, and heat resistance.

[Method of Producing Acetalization Product of Ethylenevinyl Alcohol Copolymer]

The method of producing an acetalization product of the present invention is not particularly limited, but for example, the acetalization product can be produced by a method comprising:

    (i) a step of preparing a dispersion liquid containing an ethylenevinyl alcohol copolymer, an aldehyde, and a solvent and impregnating at least a portion of the aldehyde into the ethylenevinyl alcohol copolymer; and
    (ii) a step of adding a catalyst to the dispersion liquid, thereby acetalizing the ethylenevinyl alcohol copolymer after step (i),

wherein the acetalization is carried out by a solid-liquid reaction.

<Step (i)>

Step (i) is a step of preparing a dispersion liquid containing an ethylenevinyl alcohol copolymer, an aldehyde, and a solvent (hereinafter sometimes referred to as "EVOH dispersion liquid") and impregnating at least a portion of the aldehyde into the ethylenevinyl alcohol copolymer.

By mixing the ethylenevinyl alcohol copolymer and the aldehyde in the dispersion liquid and allowing them to come into sufficient contact, at least a portion of the aldehyde can be impregnated into the ethylenevinyl alcohol copolymer.

In the method of the present invention, the EVOH contained in the EVOH dispersion liquid may be either a porous body or a non-porous body.

In the case of using a porous body of ethylenevinyl alcohol copolymer (hereinafter sometimes referred to as "EVOH porous body" or simply referred to as "porous body") as a raw material, it is easy to acetalize EVOH and to adjust the symmetry factor of the resulting acetalization product within the above-described range. Therefore, even when solid EVOH is acetalized by a heterogeneous method, intermolecular crosslinking of EVOH is unlikely to occur, and an acetalization product with excellent transparency can be obtained. This is considered to be because by using the EVOH porous body, when at least a portion of the aldehyde described later is impregnated into the EVOH, the aldehyde, which is an acetalizing agent, penetrates not only into the solid surface of the EVOH but also into the solid interior of the EVOH through the pores such that the EVOH can be acetalized uniformly, and as a result, the difference in the degree of acetalization between the solid surface and the interior of the acetalization product obtained by acetalization becomes small, and an acetalization product having a narrow distribution of the degree of acetalization can be obtained.

In the present invention, the EVOH porous body is preferably an EVOH having a large number of pores, and it is preferable that some or all of the pores have openings on the surface of the porous body.

In one embodiment of the present invention, the median pore diameter of the EVOH porous body is preferably 0.005 $\mu$m or more, more preferably 0.01 $\mu$m or more, and still more preferably 0.02 $\mu$m or more from the viewpoint of easily improving the transparency of the acetalization product of EVOH obtained by uniformly acetalizing EVOH. In addition, the median pore diameter is preferably 1 $\mu$m or less, more preferably 0.5 $\mu$m or less, still more preferably 0.2 $\mu$m or less, even more preferably less than 0.2 $\mu$m, yet preferably 0.18 $\mu$m or less, yet more preferably 0.15 $\mu$m or less, and particularly preferably 0.12 $\mu$m or less from the viewpoint that since the porous body easily retains its strength, it is less likely to collapse and turn into a powder during the step of producing an acetalization product of EVOH, and as a result, blockages in the production line are less likely to occur, and an acetalization product can be produced more efficiently. The median pore diameter is the median diameter (d50) of all pores having a pore diameter in a range of from 0.005 to 100 $\mu$m in the log differential pore volume (logarithmic differential pore volume) distribution. The reason why the reference pore diameter is set to a range of from 0.005 to 100 $\mu$m is that the pore distribution with a pore diameter larger than 100 $\mu$m mainly includes voids between particles, and the pore distribution with a pore diameter of less than 0.005 $\mu$m, which is near the lower limit of measurement, includes pseudo pores due to compression or the like.

The median pore diameter of the porous body can be adjusted by the production conditions of the porous body. For example, in the case of producing an EVOH porous body by preparing a composition containing EVOH and at least one solvent selected from water or alcohol, extruding the composition into a solidification liquid in the form of a strand, solidifying the strand, and then cutting the strand, the median porous size of the porous body can be adjusted by the type and content of the solvent contained in the composition, the linear velocity when the composition is extruded into a solidification liquid, the extrusion temperature, and the cooling rate.

The median pore diameter of these pores can be measured by a pore distribution measuring device, for example, by the method described in Examples.

In one embodiment of the present invention, the pore surface area (specific surface area) of the EVOH porous body at from 0.005 to 100 $\mu$m as measured by mercury intrusion porosimetry is preferably 25 m$^2$/g or more, and more preferably 30 m$^2$/g or more from the viewpoint of easily improving the transparency of the acetalization product of EVOH. In addition, the pore surface area of the EVOH porous body is preferably 45 m$^2$/g or less, more preferably 41 m$^2$/g or less, and still more preferably 39 m$^2$/g or less from the viewpoint of easily reducing adhesion between EVOH porous bodies during high-temperature washing in the production process of an EVOH porous body.

The pore surface area of the EVOH porous body in a range of from 0.005 to 100 $\mu$m can be adjusted by the producing conditions of the porous body. For example, in the same manner as in the method of adjusting the median pore diameter of the porous body, the pore surface area can be adjusted by the type and content of the solvent contained in the composition, the linear velocity when the composition is extruded into a solidification liquid, the extrusion temperature, and the cooling rate. The pore surface area of the EVOH porous body can be adjusted by the production conditions of the porous body.

In one embodiment of the present invention, the pore volume of the EVOH porous body may be preferably 0.1 mL/g or more, more preferably 0.2 mL/g or more, and still more preferably 0.25 mL/g or more from the viewpoint of easily improving the transparency of the acetalization product of EVOH obtained by uniformly acetalizing EVOH. From the viewpoint of easy handling, the pore volume may be preferably 1.0 mL/g or less, more preferably 0.5 mL/g or less, and still more preferably 0.3 mL/g or less.

The pore volume of the EVOH porous body can be adjusted by the production conditions of the porous body. For example, in the same manner as in the method of adjusting the median pore diameter of the porous body, the pore volume can be adjusted by the type and content of the solvent contained in the composition, the linear velocity when the composition is extruded into a solidification liquid, the extrusion temperature, and the cooling rate when solidifying. The pore volume of the porous body can be measured by a pore distribution measuring device.

In one embodiment of the present invention, the average particle size of the EVOH porous body may be preferably 1 mm or more, more preferably 2mm or more, and still more preferably 3 mm or more from the viewpoint of handling. In addition, the average particle size may be preferably 10 mm or less, more preferably 7 mm or less, and still more preferably 5 mm or less from the viewpoints of facilitating uniform acetalization of EVOH and easily improving the transparency of the acetalization product obtained thereby. The average particle size can be measured, for example, by the method described in Examples.

The shape of the EVOH porous body is not particularly limited, and examples thereof include a powder, pellets, flakes, beads, and irregular shapes. Among these, the porous body is preferably in the form of a powder or pellets, and more preferably in the form of pellets. In the present invention, a pellet-like porous body refers to a solid porous body having a substantially uniform size, such as a sphere, a cylinder, an elliptical cylinder, or a polygonal column, and its cross-section may be circular, elliptical, polygonal, or the like.

In a case in which the EVOH porous body in the present invention is in the form of pellets, the pellet-like porous body can be produced by a method in which an ethylenevinyl alcohol copolymer composition is extruded into a solidification liquid so as to solidify the copolymer into a strand shape, and then the resulting strand-like solidified body is cut to a predetermined length using a strand cutter or the like, a method in which an ethylenevinyl alcohol copolymer composition is directly cut in the molten state, or the like, as described below.

An example of an ethylenevinyl alcohol copolymer is one obtained by copolymerizing ethylene with a vinyl ester monomer and then saponifying the resulting copolymer. In one embodiment of the present invention, the ethylene content (hereinafter sometimes referred to as the "ethylene unit content") in the ethylenevinyl alcohol copolymer is preferably from 20% to 80% by mole with respect to all monomeric units constituting EVOH. The ethylene content may be preferably 20% by mole or more, more preferably 25% by mole or more, still more preferably 30% by mole or more, and particularly preferably 32% by mole or more (e.g., 35% by mole or more) from the viewpoint of easily improving the molding processability of the resulting acetalization product or the flexibility, barrier properties, and transparency of the resulting resin film, or may be preferably 80% by mole or less, more preferably 60% by mole or less, still more preferably 55% by mole or less, particularly preferably 50% by mole or less, even more preferably 48% by mole or less, more particularly preferably 44% by mole or less, still more particularly preferably 42% by mole or less, even more particularly preferably 38% by mole or less, and most preferably 36% by mole or less from the viewpoint of easily improving the heat resistance of the resulting acetalization product.

The saponification degree of EVOH is not particularly limited. For example, it is preferably 95% by mole or more, more preferably 98% by mole or more, still more preferably 99% by mole or more, and particularly preferably 99.9% by mole or more from the viewpoint of thermal decomposition resistance. The upper limit of the saponification degree is not particularly limited, and it may be, for example, 100% by mole or less.

The vinyl alcohol unit content in the ethylenevinyl alcohol copolymer may be preferably 40% by mole or more, more preferably 45% by mole or more, and still more preferably 50% by mole or more with respect to all monomeric units constituting EVOH from the viewpoint of easily improving the barrier properties of the resulting acetalization product, or may be preferably 80% by mole or less, more preferably 75% by mole or less, still more preferably 70% by mole or less, particularly preferably 65% by mole or less, and more particularly preferably 55% by mole or less from the viewpoint of easily improving the transparency of the resulting acetalization product.

In the present invention, the ethylenevinyl alcohol copolymer may contain, in addition to ethylene units, vinyl alcohol units, and vinyl ester units, monomeric units derived from monomers copolymerizable with these units (hereinafter sometimes referred to as "other monomeric units") within a range that does not impair the effects of the present invention. Examples of the other monomeric units include the same monomeric units as the other monomeric units that may be contained in the acetalization product. In a case in which the ethylenevinyl alcohol copolymer contains other monomeric units, the content thereof may be preferably 15% by mole or less, and more preferably 10% by mole or less.

The ethylene unit content, the vinyl alcohol unit content, and the content of other monomeric units optionally contained in EVOH in the present invention can be determined by NMR measurement, for example, by the method described in Examples.

The copolymerization form of the ethylenevinyl alcohol copolymer is not particularly limited, and may be any of a random copolymer, an alternating copolymer, a block copolymer, a graft copolymer, and the like.

In one embodiment of the present invention, from the viewpoint of easily reducing deterioration due to heat during molding processing of the resulting acetalization product, the melt flow rate of the ethylenevinyl alcohol copolymer measured at 190°C and 2.16 Kg in accordance with JIS K7210:2014 may be preferably from 1 to 30 g/10 min, more preferably from 1.5 to 20 g/10 min, still more preferably from 2 to 10 g/10 min, and particularly preferably from 2.5 to 9 g/10 min.

The method of producing the ethylenevinyl alcohol copolymer as a porous body is not particularly limited, and the copolymer can be produced by a known method. As an example, a method of producing a pellet-like EVOH porous body will be described.

As described in, for example, JP-A-11-293077 or JP-A-2002-121290, the pellet-like EVOH porous body can be produced by a method comprising: a step of preparing a composition comprising an ethylenevinyl alcohol copolymer and at least one solvent selected from water and alcohol; and a step of extruding the composition into a solidification liquid in the form of a strand, solidifying the strand, and then cutting the strand, or a step of directly cutting the composition in a molten state.

The EVOH contained in the composition can be obtained by copolymerizing ethylene with a vinyl ester monomer and saponifying the resulting copolymer.

Examples of vinyl ester monomers that are used as raw materials for EVOH include vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, and vinyl benzoate. Among these, vinyl acetate is preferred.

The method of copolymerizing ethylene and a vinyl ester monomer is not particularly limited, and copolymerization may be carried out by a conventionally known method, such as a solution polymerization method, a bulk polymerization method, a suspension polymerization method, or an emulsion polymerization method. The polymerization initiator that can be used in copolymerization can be appropriately selected from conventionally known polymerization initiators such as azo-based initiators, peroxide-based initiators, and redox-based initiators depending on the polymerization method.

The saponification of the copolymer of ethylene and a vinyl ester monomer can be carried out by a conventionally known method such as alcoholysis or hydrolysis using an alkali catalyst or an acid catalyst. Among these, saponification using methanol as a solvent and caustic soda (NaOH) as a catalyst is preferred because it is simple.

The alcohol that can be contained in the composition is not particularly limited when it is a solvent that can dissolve EVOH, and examples thereof include methanol, ethanol, propanol, and isopropanol. Among these alcohols, alcohols having a boiling point of 100°C or less are preferred because they have a low boiling point and are easily removed, and methanol is particularly preferred.

In a case in which the composition contains water as a solvent, the composition may be prepared by adding water directly to EVOH or to a composition containing EVOH and an alcohol. Alternatively, the composition may be prepared by dissolving EVOH in alcohol, and concentrating the resulting EVOH alcohol solution as necessary, and then adding water to the EVOH alcohol solution in an amount such that EVOH does not precipitate. Alternatively, water vapor may be introduced into EVOH or a composition containing EVOH and an alcohol, and at least a portion of the alcohol may be expelled together with the water vapor, thereby obtaining a composition containing EVOH and water, or a composition containing EVOH, water, and an alcohol.

The alcohol that can be used for preparing the EVOH alcohol solution is not particularly limited when it is a solvent that can dissolve EVOH. Examples thereof include the same alcohols that may be contained in the composition. Alcohols having a boiling point of 100°C or less are preferred because they have a low boiling point and are easily removed, and methanol is particularly preferred.

The alcohol content in the EVOH alcohol solution may be preferably from 1 to 500 parts by mass and more preferably from 5 to 200 parts by mass based on 100 parts by mass of EVOH.

In a case in which the composition contains water, from the viewpoint of facilitating uniform acetalization of EVOH and facilitating removal of neutralized salts produced by neutralization after the acetalization reaction, the water content is preferably 10 parts by mass or more, more preferably 30 parts by mass or more, and still more preferably 50 parts by mass or more with respect to 100 parts by mass of EVOH. In addition, from the viewpoint that it is easy to increase the strength of the resulting porous body and therefore easy to efficiently produce an acetalization product, it is preferably 500 parts by mass or less, more preferably 300 parts by mass or less, and still more preferably 200 parts by mass or less.

In a case in which the composition contains alcohol, from the viewpoint of facilitating uniform acetalization of EVOH and facilitating removal of neutralized salts produced by neutralization after the acetalization reaction, the alcohol content is preferably 10 parts by mass or more, more preferably 30 parts by mass or more, and still more preferably 50 parts by mass or more with respect to 100 parts by mass of EVOH. In addition, from the viewpoint that it is easy to increase the strength of the resulting porous body and therefore easy to efficiently produce an acetalization product, it is preferably 500 parts by mass or less, more preferably 300 parts by mass or less, and still more preferably 200 parts by mass or less.

A solidification liquid for solidifying the composition is not particularly limited when it is a solvent capable of solidifying EVOH. However, it is preferable to use water, alcohol, or a mixed solvent of water and alcohol as the solidification liquid.

The temperature of the solidification liquid is preferably from 0°C to 50°C and more preferably from 0°C to 30°C from the viewpoint of easily solidifying the composition sufficiently. The temperature of the composition when it is extruded into the solidification liquid is preferably from 90°C to 150°C and more preferably from 95°C to 140°C from the viewpoint of the fluidity of EVOH.

As described above, by extruding the composition into the solidification liquid and solidifying it, the obtained solidified body becomes a porous body having oriented pores.

The resulting strand-like solidified body may be cut, for example, by a strand cutter or the like. By cutting the resulting strand-like solidified body with a strand cutter or the like, a pellet-like EVOH porous body can be obtained.

As a method of directly cutting the composition in a molten state to obtain a pellet-like EVOH porous body, a method in which the molten composition from an extruder is cut by a hot-cut method or a hot-cut method in water to obtain a pellet-like EVOH porous body can be mentioned.

As described above, by extruding the molten composition and pelletizing it, the resulting pellets become a porous body having oriented pores.

The method of producing the powdered EVOH porous body is not particularly limited, and for example, the powdered EVOH porous body may be obtained by pulverizing a pellet-like porous body obtained by the above-mentioned method with a pulverizer or the like.

The EVOH porous body may contain a solvent. When the solvent contained is a good solvent for EVOH, it is preferable that the amount of the good solvent in EVOH is reduced by drying or the like to an extent that does not clog the pores of the EVOH porous body. In a case in which the solvent contained is a poor solvent for EVOH such as water, the EVOH porous body may contain from 5 to 200 parts by mass of the poor solvent such as water per 100 parts by mass of the EVOH porous body.

In the method of the present invention, in the case of using a non-porous body of ethylenevinyl alcohol copolymer (a non-porous body does not have pores)(hereinafter sometimes referred to as "EVOH non-porous body" or simply referred to as "non-porous body") as a raw material, by selecting the acetalization method (especially an acetalization method employing a preferred specific surface area and/or a preferred average particle size and/or a preferred aldehyde impregnation time and/or a preferred acetalization reaction time and/or a preferred acetalization catalyst concentration of raw material EVOH) or the like, EVOH can be acetalized uniformly and the symmetry factor of the resulting acetalization product can be adjusted within the above-described range. Therefore, even when solid EVOH is acetalized by a heterogeneous method, intermolecular crosslinking of EVOH is unlikely to occur, and an acetalization product with excellent transparency can be obtained.

In one embodiment of the present invention, the average particle size of the EVOH non-porous body may be preferably 0.8 μm or more, more preferably 1.0 μm or more, still more preferably 10 μm or more, and particularly preferably 50 μm or more from the viewpoint of handling. In addition, the average particle size is preferably 1 mm or less, more preferably 0.5 mm or less, still more preferably 0.4 mm or less, and particularly preferably 0.3 mm or less. When the average particle size of the EVOH non-porous body is equal to or less than the upper limit, the EVOH is easily acetalized uniformly, and the transparency of the resulting acetalization product is easily improved. This is considered to be because an acetalization product having a narrow distribution of the degree of acetalization is obtained, which results from that by using an EVOH non-porous body having a larger specific surface area due to an average particle size not more than the upper limit, the proportion of the central portion of the EVOH non-porous body where acetalization does not or is difficult to progress can be reduced, and when at least a portion of the aldehyde described below is impregnated into EVOH, the aldehyde, which is an acetalizing agent, penetrates into the irregularities or gaps that normally exist on the surface of the EVOH non-porous body, and acetalization proceeds even inside the EVOH non-porous body, thereby achieving more uniform acetalization. The average particle size can be measured, for example, by the method described in Examples.

The shape of the EVOH non-porous body is not particularly limited, and examples thereof include a powder, pellets, flakes, beads, and irregular shapes. Among these, the non-porous body is preferably in the form of a powder or pellets. In the present invention, a pellet-like non-porous body refers to a solid non-porous body having a substantially uniform size, such as a sphere, a cylinder, an elliptical cylinder, or a polygonal column, and its cross-section may be circular, elliptical, polygonal, or the like.

In a case in which the EVOH non-porous body in the present invention is in the form of pellets, the pellet-like non-porous body can be produced by a method in which an ethylenevinyl alcohol copolymer composition is extruded into a solidification liquid so as to solidify the copolymer into a strand shape, and then the resulting strand-like solidified body is cut to a predetermined length using a strand cutter or the like, a method in which an ethylenevinyl alcohol copolymer composition is directly cut in the molten state, or the like, as described below.

An example of an ethylenevinyl alcohol copolymer is one obtained by copolymerizing ethylene with a vinyl ester monomer and then saponifying the resulting copolymer. In one embodiment of the present invention, the ethylene content (hereinafter sometimes referred to as the "ethylene unit content") in the ethylenevinyl alcohol copolymer is preferably from 20% to 80% by mole with respect to all monomeric units constituting EVOH. The ethylene content may be preferably 20% by mole or more, more preferably 25% by mole or more, still more preferably 30% by mole or more, and particularly preferably 32% by mole or more (e.g., 35% by mole or more) from the viewpoint of easily improving the molding processability of the resulting acetalization product or the flexibility, barrier properties, and transparency of the resulting resin film, or may be preferably 80% by mole or less, more preferably 60% by mole or less, still more preferably 55% by mole or less, particularly preferably 50% by mole or less, even more preferably 48% by mole or less, more particularly preferably 44% by mole or less, still more particularly preferably 42% by mole or less, and even more particularly preferably 38% by mole or less from the viewpoint of easily improving the heat resistance of the resulting acetalization product.

The saponification degree of EVOH is not particularly limited. However, for example, it is preferably 95% by mole or more, more preferably 98% by mole or more, still more preferably 99% by mole or more, and particularly preferably 99.9% by mole or more from the viewpoint of thermal decomposition resistance. The upper limit of the saponification degree is not particularly limited, and it may be, for example, 100% by mole or less.

The vinyl alcohol unit content in the ethylenevinyl alcohol copolymer may be preferably 40% by mole or more, more preferably 45% by mole or more, and still more preferably 50% by mole or more with respect to all monomeric units constituting EVOH from the viewpoint of easily improving the barrier properties of the resulting acetalization product, or may be preferably 80% by mole or less, more preferably 75% by mole or less, still more preferably 70% by mole or less, particularly preferably 65% by mole or less, and more particularly preferably 55% by mole or less from the viewpoint of easily improving the transparency of the resulting acetalization product.

In the present invention, the ethylenevinyl alcohol copolymer may contain, in addition to ethylene units, vinyl alcohol units, and vinyl ester units, monomeric units derived from monomers copolymerizable with these units (hereinafter sometimes referred to as "other monomeric units") within a range that does not impair the effects of the present invention. Examples of the other monomeric units include the same monomeric units as the other monomeric units that may be contained in the acetalization product. In a case in which the ethylenevinyl alcohol copolymer contains other monomeric units, the content thereof may be preferably 15% by mole or less, and more preferably 10% by mole or less.

The ethylene unit content, the vinyl alcohol unit content, and the content of other monomeric units optionally contained in EVOH in the present invention can be determined by NMR measurement, for example, by the method described in Examples.

The copolymerization form of the ethylenevinyl alcohol copolymer is not particularly limited, and may be any of a random copolymer, an alternating copolymer, a block copolymer, a graft copolymer, and the like.

In one embodiment of the present invention, from the viewpoint of easily reducing deterioration due to heat during molding processing of the resulting acetalization product, the melt flow rate of the ethylenevinyl alcohol copolymer measured at 190°C and 2.16 Kg in accordance with JIS K7210:2014 may be preferably from 1 to 30 g/10 min, more preferably from 1.5 to 20 g/10 min, still more preferably from 2 to 10 g/10 min, and particularly preferably from 2.5 to 9 g/10 min.

The method of producing the ethylenevinyl alcohol copolymer as a non-porous body is not particularly limited, and the copolymer can be produced by a known method.

The method of producing the powdered EVOH non-porous body is not particularly limited. For example, the powdered EVOH non-porous body may be obtained by pulverizing a non-porous body or a porous body obtained by a known method with a pulverizer or the like. It can be confirmed, for example, by observation with an electron microscope that the pulverized porous body is a powdered EVOH non-porous body, i.e., that it has no pores.

In one embodiment of the present invention, the EVOH content in the EVOH dispersion liquid prepared in step (i) is preferably 5% by mass or more, more preferably 10% by mass or more, and still more preferably 15% by mass or more, and it is preferably 70% by mass or less, more preferably 60% by mass or less, and still more preferably 50% by mass or less with respect to the total mass of the dispersion liquid.

The aldehyde contained in the EVOH dispersion liquid is not particularly limited. Examples thereof include formaldehyde, acetaldehyde, propionaldehyde, butylaldehyde, hexylaldehyde, benzaldehyde, isobutyraldehyde, 2-ethylhexylaldehyde, 2-methylbutyraldehyde, trimethylacetaldehyde, 2-methylpentylaldehyde, 2,2-dimethylbutyraldehyde, 2-ethylbutyraldehyde, 3,5,5-trimethylhexylaldehyde, n-hexylaldehyde, n-octylaldehyde, n-nonyl aldehyde, n-decyl aldehyde, and n-dodecyl aldehyde.

The aldehyde may also be an aldehyde having a reactive carbon-carbon double bond. Examples thereof include unsaturated aldehydes; such as alkenals having 3 to 30 carbon atoms such as acrolein, methacrolein, crotonaldehyde, 3-butenal, 2-methyl-2-butenal, 2-methyl-3-butenal, 2,2-dimethyl-3-butenal, 3-methyl-2-butenal, 3-methyl-3-butenal, 2-pentenal, 2-methyl-2-pentenal, 3-pentenal, 3-methyl-4-pentenal, 4-pentenal, 4-methyl-4-pentenal, 2-hexenal, 3-hexenal, 4-hexenal, 5-hexenal, 7-octenal, 10-undecenal, 2-ethylcrotonaldehyde, 3-(dimethylamino)acrolein, myristoleinaldehyde, palmitoleinaldehyde, oleic aldehyde, elaidic aldehyde, vaccenic aldehyde, gadoleic aldehyde, erucic aldehyde, nervonic aldehyde, linoleic aldehyde, citronellal, cinnamaldehyde, and vanillin, preferably alkenals having 3 to 25 carbon atoms; alkadienals having 5 to 30 carbon atoms, such as 2,4-pentadienal, 2,4-hexadienal, 2,6-nonadienal, and citral, preferably alkadienals having 5 to 25 carbon atoms; alkatrienals having 7 to 30 carbon atoms, such as linolenic aldehyde and eleostearic aldehyde, preferably alkatrienals having 7 to 25 carbon atoms; alkatetraenals having 9 to 30 carbon atoms, such as stearidone aldehyde and arachidone aldehyde, preferably alkatetraenals having 9 to 25 carbon atoms; and alcapentaenals having 11 to 30 carbon atoms such as eicosapentaenaldehyde, preferably alcapentaenals having 11 to 25 carbon atoms.

The aldehyde contained in the EVOH dispersion liquid may be an aldehyde derivative. Examples of the aldehyde derivative include those in which a hydroxy group and an aldehyde group form an acetal or hemiacetal within the molecule. An aldehyde derivative in which a hydroxy group and an aldehyde group form an acetal or hemiacetal within the molecule has a cyclic structure, and one or two of the carbon atoms constituting the ring may be substituted with an alkyl group, preferably a methyl group or an ethyl group, and more preferably a methyl group. Examples of specific aldehyde derivatives include 2-hydroxytetrahydrofuran, 2-hydroxytetrahydropyran, 4-methyl-2-hydroxytetrahydrofuran, and 4-methyl-2-hydroxytetrahydropyran.

These aldehydes may be used singly or in combination of two or more kinds. In one embodiment of the present invention, the aldehyde is preferably butyraldehyde, isobutyraldehyde, or n-octylaldehyde from the viewpoint of easily improving the flexibility, heat resistance, and transparency of the resulting acetalization product. Isobutyraldehyde and n-octylaldehyde are particularly preferred because they enable the resulting acetalization product to have a high level of balance among the flexibility, heat resistance, and barrier properties.

The content of the aldehyde contained in the EVOH dispersion liquid is not particularly limited and may be appropriately adjusted depending on the desired degree of acetalization. In one embodiment of the present invention, the content of the aldehyde may be preferably from 1 to 40 parts by mass, more preferably from 1.5 to 35 parts by mass, and still more preferably from 2 to 30 parts by mass with respect to 100 parts by mass of EVOH from the viewpoint of easily improving the transparency and flexibility of the resulting acetalization product.

In the method of the present invention, acetalization is carried out by a solid-liquid reaction. Thus, the solvent contained in the EVOH dispersion liquid is a poor solvent for EVOH and an acetalization product thereof, preferably a solvent containing water, and more preferably water.

The method of preparing the EVOH dispersion liquid is not particularly limited. For example, the EVOH dispersion liquid may be prepared by adding an aldehyde to a dispersion liquid in which EVOH is dispersed in a solvent, or the dispersion liquid may be prepared by adding a solvent to a mixture of EVOH and an aldehyde.

In the method of the present invention, after preparing the EVOH dispersion liquid but before adding the catalyst, by impregnating at least a portion of the aldehyde into the ethylenevinyl alcohol copolymer so as to impregnate the EVOH porous body with the aldehyde or so as to allow the aldehyde to penetrate into the irregularities or gaps on the surface of the EVOH non-porous, EVOH can be uniformly acetalized. Therefore, the symmetry factor of the resulting acetalization product can be easily adjusted to fall within the above-described range, and transparency can be easily improved.

The temperature at which the aldehyde is impregnated into the EVOH is not particularly limited. However, it may be, for example, 20°C or more, preferably 30°C or more, more preferably 40°C or more, and still more preferably 50°C or more from the viewpoint of being able to quickly impregnate the aldehyde into EVOH. In addition, from the viewpoint of reducing fusion between EVOH, it may be preferably 100°C or less, more preferably 90°C or less, and still more preferably 80°C or less.

The time for impregnating the EVOH porous body with the aldehyde can be appropriately selected depending on the impregnation temperature, the pore structure of the EVOH porous body, and the like, and may be preferably 2 hours or more, more preferably 2.5 hours or more, still more preferably 3 hours or more, even more preferably 4 hours or more, and particularly preferably 5 hours or more. The upper limit thereof is not particularly limited and may be, for example, 10 hours. The time for impregnating the EVOH non-porous body with the aldehyde can be appropriately selected depending on the impregnation temperature, the average particle size of the EVOH non-porous body, and the like, and may be preferably 4 hours or more, more preferably 5 hours or more, still more preferably 6 hours or more, even more preferably 8 hours or more, and particularly preferably 10 hours or more. The upper limit thereof is not particularly limited and may be, for example, 24 hours.

<Step (ii)>

Step (ii) is a step of impregnating EVOH with an aldehyde and then adding a catalyst to the EVOH dispersion liquid prepared in step (i) to acetalize EVOH. In the method of the present invention, the acetalization is carried out by a solid-liquid reaction. By carrying out acetalization by a solid-liquid reaction, the Tm/Tg (K/K) of the resulting acetalization product can be easily adjusted to fall within the above-described range. Therefore, flexibility and heat resistance can be easily improved while maintaining transparency. Furthermore, by carrying out acetalization by a solid-liquid reaction, the acetalization product produced can be separated from the reaction liquid by a filtration operation, making it easy to produce the acetalization product efficiently and in high yield. According to the present invention, the method of carrying out acetalization by a solid-liquid reaction is a method in which by using a poor solvent for EVOH and an acetalization product of EVOH produced by acetalization as a solvent for an acetalization reaction, the resulting acetalized product is obtained as a solid dispersed in a dispersion liquid without dissolving the EVOH and the acetalization product in the solvent in the acetalization step.

The catalyst for acetalization is not particularly limited and may be an inorganic acid or an organic acid. Examples thereof include acid catalysts such as acetic acid, paratoluenesulfonic acid, nitric acid, sulfuric acid, hydrochloric acid, phosphoric acid, and carbonic acid. Among these catalysts, inorganic acids such as hydrochloric acid, sulfuric acid, and nitric acid are preferred from the viewpoints of easily increasing the reaction rate of the acetalization reaction, being easily washed away from the produced acetalization product, and facilitating efficient production of the acetalization product.

The amount of the catalyst added to the EVOH dispersion liquid can be appropriately selected depending on the type of catalyst and/or the reaction temperature. The catalyst concentration in the EVOH dispersion liquid is preferably from 0.001 to 1.0 mol/L, more preferably from 0.01 to 0.8 mol/L, still more preferably from 0.02 to 0.25 mol/L, and even more preferably from 0.02 to 0.1 mol/L.

The amount of the catalyst with respect to 100 parts by mass of EVOH in the EVOH dispersion liquid is preferably from 1 to 75 parts by mass, more preferably from 5 to 50 parts by mass, and still more preferably from 7.5 to 35 parts by mass.

The method of adding the catalyst to the EVOH dispersion liquid is not particularly limited. For example, the catalyst may be added to the EVOH dispersion liquid all at once, or the catalyst may be added in several portions. From the viewpoint of easily obtaining an acetalization product having a small haze and excellent transparency and barrier properties, it is preferable to add the catalyst to the EVOH dispersion liquid in a plurality of portions, and particularly preferably to add the catalyst in two portions.

In the case of adding the catalyst to the EVOH dispersion liquid in a plurality of portions, the amount of the catalyst added in the first portion is preferably 50% by mass or less, more preferably 40% by mass or less, and still more preferably 30% by mass or less with respect to the total amount added. When the amount of the catalyst added in the first portion is equal to or less than the upper limit, the distribution of the degree of acetalization becomes narrow, and the transparency of the obtained acetalization product tends to be improved.

The reaction temperature for acetalization is preferably equal to or lower than the glass transition temperature of EVOH, from the viewpoints of easily maintaining the pores of the EVOH porous body and reducing fusion of the EVOH porous body and the EVOH non-porous body during the reaction. The reaction temperature may be preferably from 10°C to 80°C, more preferably from 20°C to 70°C, and still more preferably from 30°C to 60°C. The acetalization may be carried out in air or in an inert gas such as nitrogen gas or argon gas, and may be carried out under ordinary pressure, increased pressure, or reduced pressure.

After the acetalization reaction, the resulting reaction solution may be neutralized with an alkali, if necessary, and then the acetalization product may be separated and purified from the reaction liquid by a conventional separation means such as filtration, concentration, reprecipitation, or recrystallization. The neutralized salt generated by neutralization is preferably removed by washing or the like. The alkali that can be used for neutralization is not particularly limited, and examples thereof include sodium hydroxide, potassium hydroxide, ammonia, sodium acetate, sodium carbonate, sodium hydrogen carbonate, and potassium carbonate.

The acetalization reaction time, i.e., the time from adding the catalyst to completing the acetalization reaction (neutralization or separation and purification) is preferably 2 hours or more, more preferably 6 hours or more, still more preferably 8 hours or more, and particularly preferably 12 hours or more. The upper limit of the acetalization reaction time is not particularly limited, and may be, for example, 30 hours.

The present inventors have found that by employing the above-mentioned preferred embodiment of the acetalization method, in particular, by adjusting the at least one, preferably at least two, and more preferably all of the specific surface area and/or average particle size of the raw material EVOH resin, the aldehyde impregnation time, the acetalization catalyst concentration, and the acetalization reaction time to fall within the above-mentioned preferred ranges, it is possible to produce an acetalization product capable of forming a resin film having superior barrier properties, transparency, stretchability, flexibility, and heat resistance.

[Composition]

The present invention is also directed to a composition comprising: the acetalization product of the present invention (hereinafter sometimes referred to as "acetalization product (A)" or "(A)"); and (B) one or more resins selected from the group consisting of (B-1) an acetalization product of ethylenevinyl alcohol copolymer other than (A), (B-2) an ethylenevinyl alcohol copolymer, and (B-3) a resin other than (B-1) and (B-2).

Since the composition of the present invention contains the acetalization product (A), it can form a resin film that is excellent in the barrier properties, transparency, stretchability, flexibility, and heat resistance. The content of the acetalization product (A) in the composition of the present invention may be preferably 5% by mass or more, more preferably 7.5% by mass or more, still more preferably 10% by mass or more, even more preferably 20% by mass or more, and even more preferably 25% by mass or more. When the content of the acetalization product (A) is equal to or more than the above lower limit, it is easy to obtain a resin film that is excellent in all of the barrier properties, transparency, stretchability, flexibility, and heat resistance. The upper limit thereof is not particularly limited, and may be, for example, less than 100% by mass.

Examples of the acetalization product of ethylenevinyl alcohol copolymer (B-1) other than (A) include an acetalization product of ethylenevinyl alcohol copolymer that does not satisfy one or more of Formula (1), Formula (2), and the oxygen transmission rate at 20°C and 65%RH equal to or less than 150 cc·20 $\mu$m/m$^2$·day·atm. The acetalization product (B-1) may be a resin comprising an ethylene unit, a vinyl alcohol unit, an acetal unit, and optionally a vinyl ester unit. The content of each unit of the acetalization product (B-1), the degree of acetalization, Tm, Tg, MFR, and tensile modulus may be the same as or different from those described in the section [Acetalization Product of Ethylenevinyl Alcohol Copolymer]. The acetalization product (B-1) may be provided singly or in combination of two or more kinds differing in their property such as the content of each unit.

In one embodiment of the present invention, the Tm/Tg (K/K) of the acetalization product (B-1) is preferably less than 1.27, more preferably 1.25 or less, still more preferably 1.23 or less, and particularly preferably 1.21 or less from the viewpoint of easily improving the transparency of the composition, and it is preferably 1.10 or more, more preferably 1.12 or more, and still more preferably 1.15 or more from the viewpoint of easily improving the heat resistance of the composition. The Tm/Tg (K/K) can be determined in the same manner as in the case of the acetalization product (A).

The content of the resin (B-1) in the composition of the present invention is preferably 75 parts by mass or less with respect to 100 parts by mass of the acetalization product (A) from the viewpoint of easily improving the gas barrier properties of the resulting resin film, and it may be, for example, 0 parts by mass or more, preferably 10 parts by mass or more, more preferably 15 parts by mass or more, still more preferably 20 parts by mass or more, and particularly preferably 25 parts by mass or more with respect to 100 parts by mass of the acetalization product (A) from the viewpoint of easily improving transparency and/or flexibility.

Examples of the ethylenevinyl alcohol copolymer (B-2) include an ethylenevinyl alcohol copolymer described as a raw material of the acetalization product of the present invention in the section [Method of Producing Acetalization Product of Ethylenevinyl Alcohol Copolymer]. Note that an ethylenevinyl alcohol copolymer serving as the resin (B-2) may be a porous body or a non-porous body. The ethylenevinyl alcohol copolymer (B-2) may be provided singly or in combination of two or more kinds differing in their property such as the content of each unit.

The content of the resin (B-2) in the composition of the present invention is preferably 350 parts by mass or less with respect to 100 parts by mass of the acetalization product (A) from the viewpoint of easily improving the flexibility of the resulting resin film, and it may be, for example, 0 parts by mass or more, preferably 10 parts by mass or more, more preferably 20 parts by mass or more, still more preferably 30 parts by mass or more, and particularly preferably 100 parts by mass or more with respect to 100 parts by mass of the acetalization product (A) from the viewpoint of easily improving the gas barrier properties and/or heat resistance of the composition.

Examples of the resin (B-3) other than (B-1) and (B-2) include: polyolefin resins such as polyethylene, polypropylene, polybutene-1, poly-4-methylpentene-1, and polynorbornene; ethylene-based ionomers; styrene-based resins such as Polystyrene, styrene-maleic anhydride copolymer, high impact polystyrene, AS resin, ABS resin, AES resin, AAS resin, ACS resin, and MBS resin; methyl methacrylate-based polymers and methyl methacrylate-styrene copolymers; polyester resins such as polyethylene terephthalate and polybutylene terephthalate; polyamides such as nylon 6, nylon 66, and polyamide elastomers; polycarbonate, polyvinyl chloride, polyvinylidene chloride, polyvinyl alcohol, polyacetal, polyvinylidene fluoride, polyurethane, modified polyphenylene ether, polyphenylene sulfide, silicone modified resin, acrylic rubber, acrylic thermoplastic elastomer, silicone rubber; styrene-based thermoplastic elastomers such as SEPS, SEBS, and SIS; and olefin-based rubbers such as IR, EPR, and EPDM. These resins may be used singly or in combination of two or more kinds.

Examples of the polyamide elastomer include a thermoplastic elastomer having a hard segment consisting of a polyamide and a soft segment consisting of a polyether. Examples of the polyamide constituting the hard segment include nylon 6, nylon 66, nylon 11, and nylon 12, with nylon 12 being particularly preferred. Examples of the polyether constituting the soft segment include polyethylene glycol, polypropylene glycol, and polytetramethylene glycol. As the polyamide elastomer, commercially available products may be used. Examples of commercially available polyamide elastomers include "UBESTA" (registered trademark) XPA manufactured by Ube Industries, Ltd., and "Pebax" (registered trademark) 33 series, 53 series, MV series, MH series, HD series, and MP series manufactured by Arkema K.K.

The content of the resin (B-3) in the composition of the present invention is preferably 100 parts by mass or less with respect to 100 parts by mass of the acetalization product (A) from the viewpoint of easily improving the gas barrier properties of the resulting resin film, and may be, for example, 0 parts by mass or more, preferably 10 parts by mass or more, more preferably 20 parts by mass or more, still more preferably 30 parts by mass or more, particularly preferably 100 parts by mass or more with respect to 100 parts by mass of the acetalization product (A) from the viewpoint of easily improving the flexibility and/or adhesion of the composition.

Among the resins (B-1) to (B-3), from the viewpoint of easily improving the heat resistance, transparency, and barrier properties of the resulting resin film, the acetalization product of ethylenevinyl alcohol copolymer (B-1) and the ethylenevinyl alcohol copolymer (B-2) other than (A) are preferable, and the ethylenevinyl alcohol copolymer (B-2) is more preferable.

Various additives can be added to the composition of the present invention, if necessary. Examples of such additives include an antioxidant, a UV absorber, a light stabilizer, an alkaline metal salt, an alkaline earth metal salt, a carboxylic acid compound, a phosphoric acid compound, a plasticizer, a heat stabilizer, an antistatic agent, a lubricant, a colorant, and a filler. In addition, in the case of crosslinking the composition of the present invention in the resin film, barrier material, or molded body of the present invention, it is preferable to add a crosslinking aid as an additive, as described later. Additives may be used singly or in combination of two or more kinds.

The content of each additive varies depending on the type, and can be appropriately selected within a range that does not impair the effects of the present invention. In the case of adding additives, the total content thereof may be, for example, 9% by mass or less, preferably 7% by mass or less, more preferably 5% by mass or less, and still more preferably 4% by mass or less with respect to the total amount of the composition.

Examples of the antioxidant include phenolic antioxidants, phosphorus-based antioxidants, and sulfur-based antioxidants. These antioxidants may be used singly or in combination of two or more kinds.

Examples of phenolic antioxidants include: an acrylate compound such as 2-t-butyl-6-(3-t-butyl-2-hydroxy-5-methylbenzyl)-4-methylphenyl acrylate or 2,4-di-t-amyl-6-(1-(3,5-di-t-amyl-2-hydroxyphenyl)ethyl)phenyl acrylate; an alkyl-substituted phenolic compound such as 2,6-di-t-butyl-4-methylphenol, 2,6-di-t-butyl-4-ethylphenol, octadecyl-3-(3,5-)di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), ethylene bis(oxyethylene) bis(3-(5-t-butyl-4-hydroxy-m-tolyl)propionate, 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dimethylethyl)-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-dit-butyl-4-hydroxybenzyl)benzene, tetrakis(methylene-3-(3',5'-di-t-butyl-4'-hydroxyphenyl)propionate)methane, triethylene glycol bis(3-(3-t-butyl-4-hydroxy-5-methylphenyl)propionate), or hexamethylene bis(3-(3,5-di-t-butyl-4-hydroxyphenyl)propionate; a triazine group-containing phenolic compound such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, or 2-octylthio-4,6-bis-(3,5-di-t-butyl-4-oxyanilino)-1,3,5-triazine.

Examples of phosphorus-based antioxidants include: a monophosphite-based compound such as triphenyl phosphite, diphenyl isodecyl phosphite, phenyl diisodecyl phosphite, tris(nonylphenyl) phosphite, tris(dinonylphenyl) phosphite, tris(2-t-butyl-4-methylphenyl)phosphite, tris(cyclohexylphenyl)phosphite, 2,2-methylenebis(4,6-di-t-butylphenyl)octylphosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, or 10-desyloxy-9,10-dihydro-9-oxa-10-phosphaphenanthrene; a diphosphite-based compound such as 4,4'-butylidene-bis(3-methyl-6-t-butylphenyl-di-tridecyl phosphite), 4,4'-isopropylidene-bis(phenyl-dialkyl(C12-C15) phosphite), 4,4'-isopropylidene-bis(diphenyl monoalkyl (C12-C15) phosphite), 1,1,3-tris(2-methyl-4-di-tridecyl phosphite-5-t-butylphenyl)butane, or tetrakis(2,4-di-t-butylphenyl)-4,4'-biphenylene phosphite. Among these, monophosphite-based compounds are preferred.

Examples of sulfur-based antioxidants include dilauryl 3,3'-thiodipropionate, distearyl 3,3'-thiodipropionate, laurylstearyl 3,3'-thiodipropionate, pentaerythritol-tetrakis-(β-lauryl-thiopropionate), and 3,9-bis(2-dodecylthioethyl)-2,4,8,10-tetraoxaspiro[5,5]undecane.

The adding amount of the antioxidant is preferably from 0 to 5 parts by mass, more preferably from 0.001 to 5 parts by mass, and still more preferably from 0.01 to 1 part by mass with respect to 100 parts by mass of the acetalization product (A).

Examples of the UV absorber include: a benzotriazole-based UV absorber such as 2-(5-methyl-2-hydroxyphenyl)benzotriazole, 2-[2-hydroxy-3,5-bis(α,α'-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, or 2-(2-hydroxy-5-t-octylphenyl)benzotriazole; and a benzoate-based UV absorber such as 2,4-di-t-butylphenyl-3,5-di-t-butyl-4-hydroxybenzoate or hexadecyl-3,5-di-t-butyl-4-hydroxybenzoate.

The content of the UV absorber may be preferably from 0 to 50000 ppm, more preferably from 10 to 50000 ppm, and still more preferably from 100 to 10000 ppm based on the mass of the acetalization product (A).

Examples of the light stabilizer include a hindered amine-based compound such as 2,2,6,6-tetramethyl-4-piperidyl benzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate, 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethylpiperidine, or sebacic acid bis(2,2,6,6-tetramethyl-1-(octyloxy)-4-piperidine).

Examples of the plasticizer include: dimethyl phthalate, diethyl phthalate, dioctyl phthalate, wax, liquid paraffin, phosphate ester, triethylene glycol-di-2-ethylhexanoate, tetraethylene glycol-di-2-ethylhexanoate, di-(2-butoxyethyl)-adipate (DBEA), di-(2-butoxyethyl)-sebacate (DBES), di-(2-butoxyethyl)-azelate, di-(2-butoxyethyl)-glutarate, di-(2-butoxyethoxyethyl)-adipate (DBEEA), di-(2-butoxyethoxyethyl)-sebacate (DBEES), di-(2-butoxyethoxyethyl)-azelate, di-(2-butoxyethoxyethyl)-glutarate, di-(2-hexoxyethyl)-adipate, di-(2-hexoxyethyl)-sebacate, di-(2-hexoxyethyl)-azelate, di-(2-hexoxyethyl)-glutarate, di-(2-hexoxyethoxyethyl)-adipate, di-(2-hexoxyethoxyethyl)-sebacate, di-(2-hexoxyethoxyethyl)-azelate, di-(2-hexoxyethoxyethyl)-glutarate, di-(2-butoxyethyl)-phthalate, and/or di-(2-butoxyethoxyethyl)-phthalate, and polypropylene glycol (PPG). Among these plasticizers, those having a sum of the number of carbon atoms and the number of oxygen atoms constituting the molecule of 28 or more are preferred. Examples of such plasticizers include triethylene glycol di-2-ethylhexanoate, tetraethylene glycol di-2-ethylhexanoate, di-(2-butoxyethyl)-adipate (DBEA), di-(2-butoxyethoxyethyl)-adipate, di-(2-butoxyethoxyethyl)-sebacate, and polypropylene glycol (PPG: average molecular weight of 400). These plasticizers may be used singly or in combination of two or more.

Examples of the heat stabilizer include hydrotalcite compounds, hindered phenolic heat stabilizers, hindered amine-based heat stabilizers, and metal salts of higher aliphatic carboxylic acids (for example, calcium stearate, magnesium stearate, and the like).

Examples of the antistatic agent include pentaerythritol monostearate, sorbitan monopalmitate, sulfated polyolefins, polyethylene oxide, and carbowax.

Examples of the lubricant include ethylene bis stearamide and butyl stearate.

Examples of the colorant include carbon black, phthalocyanine, quinacridone, indoline, azo pigments, and red iron oxide.

Examples of the filler include glass fiber, asbestos, ballastonite, and calcium silicate.

Examples of the crosslinking aid include polyfunctional allyl compounds and polyfunctional (meth)acrylic compounds. Specific examples thereof include triallyl cyanurate (TAC), triallyl isocyanurate (TAIC), pentaerythritol tetramethacrylate (PETMA), glutaraldehyde (GA), ethylene glycol dimethacrylate (EGDMA), diallyl maleate (DAM), dipropargyl maleate (DPM), dipropargyl monoallyl cyanurate (DPMAC), trimethylolpropane triacrylate (TMPTAT), tetraethylene glycol diacrylate (TEGDA), 1,6-hexaglycol diacrylate, tetramethylolmethane tetraacrylate, dipropargyl succinate, diallyl fumarate, and diallyl phthalate. Among these, triallyl cyanurate and triallyl isocyanurate are particularly preferred.

In one embodiment of the present invention, from the viewpoint of easily reducing deterioration due to heat during molding processing, the melt flow rate of the composition of the present invention measured at 190°C and 2.16 Kg in accordance with JIS K7210:2014 may be preferably from 1 to 30 g/10 min, more preferably from 2 to 20 g/10 min, still more preferably from 3 to 10 g/10 min, and particularly preferably from 2.5 to 9 g/10 min.

In one embodiment of the present invention, the oxygen transmission rate at 20°C and 65%RH of the composition of the present invention is preferably from 150 cc·20 μm/m²·day·atm or less, more preferably 120 cc·20μm/m²·day·atm or less, still more preferably 100 cc·20 μm/m²·day·atm or less, even more preferably 75 cc·20 μm/m²·day·atm or less, and particularly preferably 30 cc·20 μm/m²·day·atm or less. The lower limit of the oxygen transmission rate described above is not particularly limited, and may be, for example, 0 cc·20 μm/m²·day·atm or more.

The oxygen transmission rate can be adjusted by appropriately adjusting the blending ratio of the acetalization product (A) and the resin (B) in the composition.

The oxygen transmission rate can be measured in the same manner as the oxygen transmission rate at 20°C and 65% RH of the acetalization product of the present invention.

The tensile modulus in tensile strength and elongation measurement at 23°C and 50%RH of the composition of the present invention is preferably 2000 MPa or less, more preferably 1900 MPa or less, still more preferably 1800 MPa or less, even more preferably 1700 MPa or less, particularly preferably 1600 MPa or less, and more particularly preferably 1500 MPa or less. The lower limit of the tensile modulus is not particularly limited, but is preferably 10 MPa or more, more preferably 100 MPa or more, and still more preferably 1000 MPa or more.

The tensile elongation at break in tensile strength and elongation measurement at 23°C and 50%RH of the composition of the present invention is preferably 150% or more, more preferably 170% or more, still more preferably 180% or more, even more preferably 200% or more, particularly preferably 250% or more, and more particularly preferably 300% or more. The upper limit of the tensile elongation at break is not particularly limited, but is preferably 1000% or less, more preferably 700% or less, and still more preferably 500% or less.

By using such a composition, a flexible film or molded article can be obtained, and the film or molded article can be easily fabricated by stretching or thermoforming.

The tensile modulus and tensile elongation at break can be adjusted by appropriately adjusting the blending ratio of the acetalization product (A) and the resin (B) in the composition.

The tensile modulus and tensile elongation at break can be measured in the same manner as the tensile modulus and tensile elongation at break 23°C and 50%RH of the acetalization product (A).

The melting peak temperature Tm (°C) of the composition of the present invention measured in accordance with JIS K7121: 2012 is preferably 136°C or more, more preferably 138°C or more, still more preferably 140°C or more, even more preferably 142°C or more, and particularly preferably 145°C or more, and it is preferably 190°C or less, more preferably 185°C or less, still more preferably 183°C or less, and particularly preferably 165°C or less. When the melting peak temperature Tm is equal to or higher than the lower limit, heat resistance such as retort resistance is easily improved, whereas when the melting peak temperature Tm is equal to or lower than the upper limit, transparency and moldability are easily improved.

The melting peak temperature can be adjusted by appropriately adjusting the blending ratio of the acetalization product (A) and the resin (B) in the composition.

The melting peak temperature can be measured in the same manner as the melting peak temperature of the acetalization product (A).

In one preferred embodiment of the present invention, the composition of the present invention exhibits a low oxygen transmission rate, a low tensile modulus, a high tensile elongation at break, and a high melting peak temperature, as described above. In addition, in one preferred embodiment of the present invention, a resin film obtained from the composition of the present invention exhibits values similar to those of the haze and stretchability of the resin film of the present invention described later in the section [Resin Film, Barrier Material, Molded Body]. Therefore, the composition of the present invention can form a resin film that is excellent in all of the barrier properties, transparency, stretchability, flexibility, and heat resistance.

The applications of the acetalization product of the present invention and the composition of the present invention are not particularly limited, and they can be used, for example, as barrier materials or molded bodies in various fields. Because of their low oxygen transmission rates, they are particularly suitable for use in packaging materials for food, cosmetics, medical and chemical products in the form of bags, tubes, cups, pouches, and the like, and in laminated bodies with rubber, such as tire inner liners.

[Resin Film, Barrier Material, Molded Body]

The present invention encompasses a resin film comprising one or more layers containing the acetalization product of the present invention. In one preferred embodiment, the resin film consists of one or more layers containing the acetalization product of the present invention. In one preferred embodiment, the layers do not contain any resin other than the acetalization product of the present invention.

The present invention also encompasses the resin film comprising one or more additional layers containing one or more resins selected from the group consisting of a polyolefin, a polyamide, a polyester, and a polyurethane. In one preferred embodiment, the resin film consists of one or more layers containing the acetalization product of the present invention and one or more layers containing one or more resins selected from the group consisting of a polyolefin, a polyamide, a polyester, and a polyurethane. In one preferred embodiment, the above-described additional layers do not contain any resin other than one or more resins selected from the group consisting of a polyolefin, a polyamide, a polyester, and a polyurethane.

The present invention also encompasses a resin film comprising one or more layers containing the composition of the present invention. In one preferred embodiment, the resin film consists of one or more layers containing the composition of the present invention. In one preferred embodiment, the layers do not contain any resin other than the resins contained in the composition of the present invention.

The present invention also encompasses the resin film further comprising one or more layers containing one or more resins selected from the group consisting of a polyolefin, a polyamide, a polyester, and a polyurethane. In one preferred embodiment, the resin film consists of one or more layers containing the composition of the present invention and one or more layers containing one or more resins selected from the group consisting of a polyolefin, a polyamide, a polyester, and a polyurethane. In one preferred embodiment, the above-described additional layers do not contain any resin other than one or more resins selected from the group consisting of a polyolefin, a polyamide, a polyester, and a polyurethane.

In a case in which the resin film comprises an additional layer other than the layers containing the acetalization product of the present invention (A) or the composition of the present invention, in other words, in a case in which the resin film has a multi-layer structure, examples of the multi-layer structure include, but are not limited to, Barrier/R, R/Barrier/R, Barrier/Ad/R, Reg/Barrier/R, R/Ad/Barrier/Ad/R, and R/Reg/Ad/Barrier/Ad/Reg/R. In the above examples of the multi-layer structure, the layer containing the acetalization product of the present invention (A) or the composition of the present invention, which is often used as a barrier material, is represented as "Barrier", the adhesive resin is represented as "Ad", the additional layer mentioned above is represented as "R", and the recovered resin layer or recovered composition layer is represented as "Reg". In a case in which the multilayer structure contains a plurality of Barriers, R and Ad, the Barriers, R, Ad may be the same as each other, or may be different from each other. Each layer may be a single layer or a multilayer. In addition, R may include a recovered resin and/or a recovered composition. Here, the term "recovered resin" or "recovered composition" refers to a resin or composition obtained by recovering the resin film, barrier material, or molded article of the present invention for the purpose of reuse, and optionally pulverizing it.

A layer containing one or more resins selected from the group consisting of a polyolefin, a polyamide, a polyester, and a polyurethane as the additional layer may also contain one or more of the various additives described above, if necessary.

The polyolefin which can be used in the present invention is not particularly limited. Examples thereof include olefin homopolymers or copolymers such as linear low-density polyethylene, low-density polyethylene, medium-density polyethylene, high-density polyethylene, ethylene-vinyl acetate copolymer, ethylene-propylene copolymer, polypropylene, propylene-$\alpha$-olefin copolymer ($\alpha$-olefin having 4 to 20 carbon atoms), polybutene, and polypentene. Examples of copolymerization components other than these $\alpha$-olefins include vinyl compounds such as diolefin, N-vinylcarbazole, vinyl chloride, vinylidene chloride, styrene, acrylonitrile, and vinyl ether, unsaturated carboxylic acids such as maleic acid, acrylic acid, methacrylic acid, ethacrylic acid, fumaric acid, and itaconic acid, and their esters, their acid anhydrides, and those to which a hydroxyl group or an epoxy group has been added. For example, various copolymers such as a copolymer of a graftable monomer and a polyolefin, or an ionomer resin which is a reaction product of an $\alpha$-olefin/$\alpha,\beta$-unsaturated carboxylic acid copolymer and an ionic metal compound can be used. Moreover, as the polyolefin, chlorinated polyethylene, chlorinated polypropylene, and the like can also be used. These polyolefins may be used singly or in combination of two or more kinds.

Among the above examples, polypropylene, polyethylene, ethylene-propylene copolymer, and ethylene-vinyl acetate copolymer are particularly preferably used.

Examples of the polyamide which can be used in the present invention include polycapramide (nylon-6), poly-$\omega$-aminoheptanoic acid (nylon-7), poly-$\omega$-aminononanoic acid (nylon-9), polyundecaneamide (nylon-11), polylauryllactam (nylon-12), polyethylene adipamide (nylon-2,6), polytetramethylene adipamide (nylon-4,6), polyhexamethylene adipamide (nylon-6,6), polyhexamethylene sebacamide (nylon-6,10), polyhexamethylene dodecamide (nylon-6,12), polyoctamethylene adipamide (nylon-8,6), polydecamethylene adipamide (nylon-10,6), polydodecamethylene sebacamide (nylon-12,10), caprolactam/lauryl lactam copolymer (nylon-6/12), caprolactam/$\omega$-aminononanoic acid copolymer (nylon-6/9), caprolactam/hexamethylene adipamide copolymer (nylon-6/6,6), lauryl lactam/hexamethylene adipamide copolymer (nylon-12/6,6), hexamethylene adipamide/hexamethylene sebacamide copolymer (nylon-6,6/6,10), ethylene adipamide/hexamethylene adipamide copolymer (nylon-2,6/6,6), caprolactam/hexamethylene adipamide/hexamethylene sebacamide copolymer (nylon-6/6,6/6,10), polyhexamethylene isophthalamide, polyhexamethylene terephthalamide, and hexamethylene isophthalamide/terephthalamide copolymer. These polyamides can be used singly or in combination of two or more kinds.

Among the above examples, polyamides containing a caproamide component (for example, nylon-6, nylon-6,12, nylon-6/12, and nylon-6/6,6) are preferred.

The polyester used in the present invention is not particularly limited. Preferred examples thereof include poly(ethylene terephthalate), poly(butylene terephthalate), poly(ethylene terephthalate/isophthalate), and poly(ethylene glycol/cyclohexane dimethanol/terephthalate). Among these, poly(ethylene terephthalate) is particularly preferred. It is also possible to use, as the polyester, polyesters containing, as copolymerization components, diols such as ethylene glycol, butylene glycol, cyclohexanedimethanol, neopentyl glycol, and pentanediol, or dicarboxylic acids such as isophthalic acid, benzophenone dicarboxylic acid, diphenylsulfone dicarboxylic acid, diphenylmethane dicarboxylic acid, propylene bis(phenyl carboxylic acid), diphenyl oxide dicarboxylic acid, oxalic acid, malonic acid, succinic acid, glutaric acid, adipic acid, pimelic acid, suberic acid, azelaic acid, sebacic acid, and diethylsuccinic acid.

The polyurethane used in the present invention is not particularly limited. Examples thereof include polyether polyurethane and polyester polyurethane.

It is also preferable to use an elastomer as the resin contained in the additional layer. Therefore, in one embodiment of the present invention, the resin film comprises one or more layers containing the acetalization product or composition of the present invention and one or more layers containing an elastomer. In another embodiment of the present invention, the resin film consists of one or more layers containing the acetalization product or composition of the present invention and one or more layers containing an elastomer. In these embodiments, the layer containing the acetalization product or composition of the present invention does not contain any resin other than the acetalization product of the present invention or the resin contained in the composition of the present invention and/or the layer containing an elastomer does not contain any resin other than the elastomer.

The elastomer which can be used in the present invention is not particularly limited. Preferred examples thereof include polyurethane-based elastomers, polystyrene-based elastomers, polyamide-based elastomers, polyester elastomers, polyolefin-based elastomers, and elastomers consisting of copolymers of vinyl aromatic compounds and conjugated diene compounds.

Of the elastomers given as examples, it is preferable to use a polyurethane-based elastomer from the viewpoint of excellent interlayer adhesion between a layer containing the acetalization product of the present invention or a layer containing the composition of the present invention and a layer containing a polyurethane-based elastomer.

The thickness of one layer in the resin film is preferably 0.5 μm or more, more preferably 1 μm or more, and still more preferably 5 μm or more, and it is preferably 250 μm or less, more preferably 200 μm or less, still more preferably 150 μm or less, even more preferably 100 μm or less, particularly preferably 60 μm or less, more particularly preferably 50 μm or less, and further particularly preferably 30 μm or less. In a case in which the resin film has a plurality of layers, the thicknesses of the plurality of layers in the resin film may be the same or different.

The thickness of the resin film is preferably 1 μm or more, more preferably 5 μm or more, and still more preferably 10 μm or more from the viewpoint of easy improvement of the barrier properties, and it is preferably 1000 μm or less, more preferably 750 μm or less, still more preferably 500 μm or less, even more preferably 250 μm or less, particularly preferably 100 μm or less, more particularly preferably 50 μm or less, and further particularly preferably 30 μm or less from the viewpoint of flexibility.

The thickness of one layer in the resin film and the thickness of the resin film can be measured by a conventional method, for example, using a contact or noncontact thickness gauge.

The resin film of the present invention has excellent transparency. The haze of the resin film of the present invention is preferably 5% or less, more preferably 3% or less, still more preferably 2% or less, even more preferably 1% or less, particularly preferably 0.5% or less, more particularly preferably 0.3% or less, and further particularly preferably 0.2% or less. Since the smaller the haze, the higher the transparency of the resin film, the lower limit is not particularly limited and may be, for example, 0.01% or more. The haze of the resin film is measured using a haze meter in accordance with JIS K7136:2000.

The resin film of the present invention has excellent stretchability. Therefore, it can be suitably used as a stretched film, particularly as a stretched film stretched at least two times in the uniaxial direction. The stretched film can also be suitably used as a heat-shrinkable film.

The stretchability can be evaluated, for example, by the method described in Examples below.

In one preferred embodiment of the present invention, the resin film of the present invention exhibits the same oxygen transmission rate, tensile modulus, tensile elongation at break, and melting peak temperature as those of the acetalization product or composition of the present invention described above in the sections [Acetalization Product of Ethylenevinyl Alcohol Copolymer] and [Composition].

Since the resin film of the present invention is excellent in all of the barrier properties, transparency, stretchability, flexibility, and heat resistance, a barrier material and a molded body consisting of the resin film of the present invention can also have such excellent physical properties.

The present invention also encompasses a barrier material consisting of the resin film of the present invention, and a molded body consisting of the resin film of the present invention.

The barrier material or molded body encompasses packaging materials, coating materials, covering materials, liners, wallpaper, decorative panels, partitions, films, heat-shrinkable films (such as skin pack films), stretched films, flexible films, flexible packaging materials, containers, bags, bottles, cups, trays, pouches, pipes, hoses, tubes, balloons, profile-shaped molded bodies, and tire inner liners.

[Method of Producing Resin Film, Barrier Material, or Molded Body]

The method of producing the resin film, barrier material, or molded body of the present invention is not particularly limited. For example, the acetalization product according to the present invention or the composition of the present invention may be formed into a film or various molded bodies by known methods such as extrusion molding, press molding, blow molding, injection molding, and solution casting. The resin film, barrier material, or molded article of the present invention can be recovered for reuse, and optionally pulverized and formed again. In addition, the resin film can be uniaxially or biaxially stretched, and can be subjected to secondary processing such as thermoforming.

As a method of producing the resin film, extrusion molding is preferably used. In this method, the acetalization product or composition of the present invention is fed into an extruder, kneaded and melted, and the resulting molten kneaded product is extruded through a die and taken up by a haul-off machine to be formed into a film. The temperature of the resin or composition during extrusion may be selected depending on the constitution of the resin or composition. For example, it is from 140°C to 270°C, preferably from 170°C to 250°C, more preferably from 180°C to 240°C, and still more preferably from 190°C to 220°C. When the temperature of the resin or composition during extrusion is equal to or lower than the upper limit, decomposition of the acetalization product or composition is reduced, and coloration is less likely to occur. When the temperature of the resin or composition during extrusion is equal to or higher than the lower limit, the acetalization product or composition is completely melted, making it easier to obtain a resin film having a favorable appearance and to reduce the generation of volatile substances. To efficiently remove the volatile substances, it is preferable to remove the volatile substances from the vent port of the extruder by reducing pressure.

To improve the barrier properties and the shape retention property under high temperature and high humidity conditions, or to improve the shrinkage when used in applications such as heat-shrinkable films, the composition of the present invention in the resin film, barrier material, and molded body of the present invention may have a crosslinked structure to the extent that the effects of the present invention are not impaired. In this case, the composition of the present invention usually contains a crosslinking aid. The method of providing a crosslinked structure is not particularly limited, but a preferred method is irradiation with energy rays. Examples of the energy rays include ionizing radiation such as ultraviolet rays, electron beams, X-rays, $\alpha$ rays, and $\gamma$ rays, with electron beams being preferred.

Regarding the method of electron beam irradiation, after primary processing such as extrusion molding, a resin film, a barrier material, or a molded body is introduced into an electron beam irradiation apparatus and irradiated with electron beams. The electron dose is not particularly limited, but is preferably from 1 to 40 Mrad and more preferably from 2 to 30 Mrad. When the electron dose is equal to or more than the lower limit, crosslinking tends to proceed sufficiently. On the other hand, when the electron dose is equal to or less than the upper limit, deterioration of the molded body is easily reduced.

For a molded body which requires a secondary processing such as (uniaxial or biaxial) stretching or thermoforming after the primary processing, it is preferred to carry out electron beam irradiation between the primary processing and the secondary processing.

The electron beam that can be used is generally an electron beam having an energy of from 150 to 10,000 KeV and emitted from various electron beam accelerators such as a Cockcroft-Walton type, a Van de Graaff type, a resonant transformer type, an insulating core transformer type, a linear accelerator, a dynamitron type, a high frequency cyclotron, but is not limited thereto.

In the case of producing a multilayer resin film or barrier material or molded body, for example, production methods such as a method of melt-extruding another resin or composition onto a film consisting of the acetalization product or composition of the present invention, a method of melt-extruding the acetalization product or composition of the present invention onto a film consisting of another resin or composition, a method of co-extruding the acetalization product or composition of the present invention with another resin or composition, a method of laminating a film consisting of the acetalization product or composition of the present invention with a film consisting of another resin or composition, optionally using a known adhesive can be mentioned. Among these, the co-extrusion molding method is preferably used.

The method of co-extrusion molding is not particularly limited. Methods such as a multi-manifold method, a feed block method, a multi-slot die method are exemplified as suitable methods. By such a forming method, multilayer films, multilayer sheets, multilayer pipes, multilayer hoses, multilayer profile-shaped molded bodies can be formed. In addition, a multilayer film or a multilayer bottle can be produced by a co-extrusion inflation molding method, a co-extrusion blow molding method, or the like. Furthermore, by subjecting the multilayer resin film or molded body to secondary processing, a molded body having a desired shape can be produced. The secondary processing encompasses, for example, uniaxial or biaxial stretching or heat treatment, rolling, vacuum forming, pressure forming, vacuum pressure forming, stretch blow molding, blow molding, and the like.

In a case in which a film consisting of the acetalization product or composition of the present invention is laminated with a film consisting of another resin or composition, known adhesives may be used. Examples of such adhesives include organic titanium compounds, isocyanate compounds, polyester-based compounds, and carboxylic acid-modified polyolefins. The carboxylic acid-modified polyolefins can be preferably used.

EXAMPLES

The present invention will be specifically described below with reference to Examples and Comparative Examples, but the present invention is not limited to the following Examples.

The analytical methods and the measurement methods of the physical properties of the ethylenevinyl alcohol copolymer (EVOH) used as the raw material in Examples and Comparative Examples and the acetalization products of ethylene-vinyl alcohol copolymer obtained, as well as the evaluation methods of the resin films, are shown below.

<Contents of Monomeric Units and Degrees of Acetalization >

For the ethylenevinyl alcohol copolymers used as raw materials in Examples and Comparative Examples and the acetalization products of ethylenevinyl alcohol copolymer obtained in Examples and Comparative Examples, the contents (unit: % by mole) of ethylene units, vinyl alcohol units, and acetal units that are acetalized vinyl alcohol units, as well as the degree of acetalization, in the ethylenevinyl alcohol copolymers and acetalization products thereof were analyzed as follows.

An ethylenevinyl alcohol copolymer was dissolved in dimethyl sulfoxide (DMSO) at 120°C, and the resulting DMSO solution was cooled to room temperature. Thereafter, N,N-dimethyl-4-aminopyridine and acetic anhydride were added to the DMSO solution, and the mixture was stirred for 1 hour to react. The copolymer was re-precipitated from the resulting reaction liquid using ion-exchanged water and acetone, washed, and then, dried, thereby obtaining an ethylenevinyl acetate copolymer. The obtained deuterated dimethyl sulfoxide (DMSO-d6) solution of the ethylenevinyl acetate copolymer was measured by a 400 MHz proton NMR measurement apparatus with a number of scans of 256. The ethylene unit content (n) with respect to all monomeric units constituting the ethylenevinyl alcohol copolymer was calculated from the intensity ratio of the peak of methine protons (peak at from 1.1 to 1.9 ppm) derived from ethylene units and vinyl acetate units in the ethylenevinyl acetate copolymer and the peak of terminal methyl protons (peak at 2.0 ppm) derived from vinyl acetate units of the obtained spectrum.

The ethylene unit is not affected by the acetalization reaction. Therefore, the ethylene unit content (n) in an ethylenevinyl alcohol copolymer is equal to the ethylene unit content (n) with respect to all monomeric units constituting the acetalization product of EVOH obtained after acetalization of the ethylenevinyl alcohol copolymer.

The vinyl alcohol unit content (l), vinyl acetate unit content (m), and acetal unit content (k) with respect to all monomeric units constituting the acetalization product of EVOH were determined by the following method. A DMSO-d6 solution of the acetalization product of EVOH was measured using a 400 MHz proton NMR measurement apparatus with a number of scans of 256. The content of each monomeric unit was calculated using the intensity ratio of the peak of methine protons derived from ethylene units, vinyl alcohol units, and vinyl acetate units (peak at from 1.0 to 1.8 ppm) and the peak of terminal methyl protons derived from acetal units (peak at from 0.8 to 1.0 ppm), and the ethylene unit content (n) in the ethylenevinyl alcohol copolymer from the obtained spectrum.

The degree of acetalization of the acetalization product of EVOH was calculated from the vinyl alcohol unit content (l), vinyl ester unit content (m), and acetal unit content (k) calculated above according to the following formula:

$$\text{Degree of acetalization (\% by mole)} = \{k/(k + l + m)\} \times 100.$$

<Median Pore Diameter, Pore Surface Area>

The EVOH porous bodies obtained in the Production Examples described below or the acetalization products of EVOH obtained in Examples and Comparative Examples were freeze-dried at -80°C. Each of them in an amount of 0.5 g was weighed into a standard 5-cc powder cell (stem volume: 0.4 cc), and the median pore diameter and pore surface area of pores having diameters in a range of from 0.005 to 100 $\mu$m were measured using a pore distribution measuring device (AutoPore V9620 manufactured by Micromeritics Instrument Corporation) under an initial pressure of 2.6 kPa. The median pore diameter is the median diameter (d50) of all pores having a pore diameter in a range of from 0.005 to 100 $\mu$m in the log differential pore volume distribution. The mercury parameters were designated as a mercury contact angle of 130 degrees and a mercury surface tension of 485 dyn/cm.

<Average Particle Size>

For 100 g of the ethylenevinyl alcohol copolymers obtained in Production Examples 1 to 6 described below, the average particle size of measurement samples (freeze-dried EVOH pellets) was measured using a CAMSIZER X2 from Verder Scientific Co., Ltd.. The particle size (Q3: 50.0%) at which the cumulative particle size distribution from the small particle size side of the circle equivalent particle size calculated by the dynamic image analysis method in accordance with ISO 13322-2 (2006) is 50% (volume basis) was defined as the average particle size.

<Melt Flow Rate (MFR)>

The melt flow rates of the ethylenevinyl alcohol copolymers used as raw materials in Examples and Comparative Examples, and the acetalization products of the ethylenevinyl alcohol copolymers obtained in Examples and Comparative Examples, were measured at 190°C and a load of 2.16 kg in accordance with JIS K7210:2014.

<Symmetry Factor ($W_{0.05h}$/2f)>

The symmetry factors of the acetalization products obtained in Examples and Comparative Examples were determined in accordance with JIS K 0124:2011 by reversed-phase partition gradient high-performance liquid chromatography (HPLC) analysis using a water-ethanol eluant under the following conditions. In the symmetry factor, "$W_{0.05h}$" represents the peak width at a height (5% peak height position) that is 1/20 of the peak height from the baseline of the measured peak obtained by HPLC analysis, and "f" represents the distance on the rising side of the peak when the peak width at the 5% peak height position is bisected by a perpendicular line including the peak apex.

(Measurement Conditions of HPLC Analysis)

Sample concentration: 1.5 mg/1g
Sample solvent: EtOH (99.5%)/ion-exchanged water = 9/1 wt% mixed solvent
Injection volume: 20 $\mu$L
Detector: Varian 380-LC; EVAP: 80°C (preheating); NEB: 50°C (second heating); Gas: 1.5 (SLM); data capture interval: 1000 milliseconds; filter: 1 $\mu$m
ODS silica column: "Shim-pack G-ODS (octadecyl-modified spherical fully porous silica gel, inner diameter 4 mm $\times$ length 10 mm, particle size 5 $\mu$m)" manufactured by SHIMADZU CORPORATION
Column temperature: 45°C
Liquid delivery flow rate: Total flow rate of 0.4 mL/min

(HPLC Analysis Procedures)

Water was used as mobile phase A and ethanol (99.5%) was used as mobile phase B. Before the sample is injected, the inside of the column of the HPLC system is filled with a mixed solvent of mobile phase A/mobile phase B in a volume ratio of 95/5. In this state, the sample is injected. Then, the solvent is allowed to flow under the following conditions.

0 to 5 min (concentration B; _5% constant)
5 to 25 min (concentration B; _5% to 100%)
25 to 30 min (concentration B; _100% constant)
30 to 31 min (concentration B; _100% to 5%)
31 to 55 min (concentration B; _5% constant)

<Tm/Tg (K/K) and Tm (°C)>

The acetalization products obtained in Examples and Comparative Examples were melted by heating from 25°C to 230°C at a heating rate of 10°C/min using a DSC (TGA/DSC1 Star System manufactured by Mettler-Toledo International Inc.), cooled from 230°C to -30°C at a cooling rate of 10°C/min, and then heated again from -30°C to 230°C at a heating rate of 10°C/min. At this time, the melting peak temperature Tm (°C) and the midpoint glass transition temperature Tg (°C) were measured in accordance with JIS K7121:2012. The obtained values were each converted into Kelvin (K) units to calculate Tm/Tg (K/K).
Similarly, the melting peak temperatures Tm (°C) of the compositions obtained in Examples and Comparative Examples were measured.

<Oxygen Transmission Rate at 20°C and 65%RH>

The resin films obtained in Examples and Comparative Examples were subjected to a heat treatment at the melting point minus 20°C for 10 minutes. Two sheets of each resin film were conditioned for humidity at 20°C and 65% RH for 5 days. Next, the oxygen transmission rate was measured using a MOCON OX-TRAN2/20 model manufactured by Modern Control Co., Ltd. in accordance with JIS K7126 (constant pressure method) under conditions of 20°C and 65% RH, and the average value was calculated.

<Crystal Melting Heat Quantity ΔH>

ΔH was measured in accordance with JIS K7121: 2012. More specifically, the acetalization products obtained in Examples and Comparative Examples were heated from 25°C to 140°C at a heating rate of 10°C/min, held at 140°C for 30 minutes, cooled from 140°C to -30°C at a cooling rate of 4°C/min, and then heated again from - 30°C to 200°C at a heating rate of 10°C/min, and ΔH was determined using DSC.

<{ΔH × Tm × Vinyl alcohol unit amount/100}/(Oxygen transmission rate at 20°C and 65%RH)>

For the acetalization products obtained in Examples and Comparative Examples, {ΔH × Tm × Vinyl alcohol unit amount/100}/(Oxygen transmission rate at 20°C and 65%RH) was calculated using ΔH, Tm, the vinyl alcohol unit amount, and the oxygen transmission rate at 20°C and 65% RH determined as described above.

<Film-forming Property>

The acetalization products and compositions obtained in Examples and Comparative Examples were each extruded into a film using a film-forming machine consisting of a 40φ extruder (PLABOR GT-40-A manufactured by Research Laboratory of Plastics Technology Co., Ltd.) and a T-die under the following extrusion conditions, thereby obtaining a single-layer resin film having a thickness of 20 μm.

Type: Single screw extruder (non-vent type)
L/D: 24
Bore diameter: 40 mmΦ
Screw: Single-thread full-flight type, surface-nitrided steel
Screw rotation speed: 40 rpm
Die: 550-mm wide coat hanger die
Lip gap: 0.3 mm
Cylinder, die temperature setting C1/C2/C3/adapter/die = 180/200/210/210/210 (°C)

The film-forming stability at this time was observed and evaluated according to the following criteria, which were used as indexes of the film-forming property.

(Evaluation of Film-forming Property)

A: Continuous film-forming was possible without any problems, and a resin film having a favorable appearance was obtained.
B: Although problems such as breakage or slackness occurred at some of the edges of a resin film, continuous film-forming was possible and a resin film having a relatively favorable appearance was obtained.
C: Problems such as breakage and/or slackness of a resin film occurred, continuous film-forming was impossible, and a resin film having a favorable appearance could not be obtained.

<Stretchability>

The resin films obtained in Examples and Comparative Examples were each set in a pantograph-type biaxial stretching equipment manufactured by Toyo Seiki Seisaku-sho, Ltd., and subjected to simultaneous biaxial stretching at 60°C and a stretching ratio of 2 × 2. The appearance of the film after stretching was evaluated according to the following criteria.

(Stretchability Evaluation Criteria)

A: There are no unevenness or localized thickness deviations.
B: There are large unevenness and large localized thickness deviations.
C: The film is torn.

<Tensile Elongation at Break and Tensile Modulus at 23°C and 50%RH>

The resin films obtained in Examples and Comparative Examples were conditioned for humidity at 23°C and 50% RH for 7 days, and then five strip-shaped test pieces having a width of 15 mm were prepared for each resin film. The test piece was set in an autograph AGS-H model manufactured by SHIMADZU CORPORATION, and a tensile test was carried out under conditions of a chuck distance of 50 mm and a tensile speed of 500 mm/min. The tensile elongation at break and the tensile modulus were determined, and their average values were calculated.

<Transparency (haze of resin film)>

Test pieces measuring 20 mm in length and 5 mm in width were cut out from the resin films obtained in Examples and Comparative Examples. The haze of the obtained test pieces was measured using a haze meter (SH7000, manufactured by NIPPON DENSHOKU INDUSTRIES Co., Ltd.) in accordance with JIS K7136:2000.
In Examples and Comparative Examples, pellet-like ethylenevinyl alcohol copolymers (EVOH1 to EVOH6) produced by the following methods were used as raw materials.

<Production Example 1>

An EVOH solution containing 100 parts by mass of EVOH with an ethylene unit content of 44% by mole and a saponification degree of 99.98% by mole, 60 parts by mass of methanol, and 40 parts by mass of water was continuously fed from the top stage of a 10-stage plate tower having a diameter of 0.3 m, and water vapor was blown in from the bottom stage thereof, thereby bringing the EVOH solution into contact with the water vapor in a countercurrent manner. The temperature inside the tower was 130°C, and the pressure inside the tower was 0.3 MPa. The hydrous EVOH obtained through the countercurrent contact with water vapor was withdrawn from the bottom of the tower. For the obtained hydrous EVOH, the temperature was 120°C, the water content was 52.4% by mass, and the methanol content was 0.02% by mass.
The hydrous EVOH was fed into a twin-screw extruder having a back slit at a rate of 42 kg/hr, and extruded from a die having 8 holes with a hole diameter of 3.0 mm attached to the tip of the extruder under the following conditions. The extruded molten product was cut with a hot cutter having two blades at a distance of 0.05 mm from the die, thereby obtaining flattened spherical pellet-like EVOH porous body. The flow rate of the cutter circulating water was 300 L/min, and the rotation speed of the cutter blade was 3000 rpm. At this time, the resin temperature (outlet) was 95°C, and the water content was 34% by mass.

<Twin-screw extruder conditions>

L/D: 14
Bore diameter: 30 mm
Screw: Full-flight
Rotation speed: 300 rpm
Cylinder temperature: 90°C
Die temperature: 120°C

The obtained EVOH porous body was washed with water at 50°C until the sodium acetate content reached 0.002% by mass or less in terms of sodium, and the washing water was removed by filtration, thereby obtaining a flattened spherical pellet-like ethylenevinyl alcohol copolymer porous body (EVOH1).
The obtained EVOH1 was in the form of flattened spherical pellets having an average particle size of 3.2 mm. The pellets of EVOH1 had pores with median pore diameters ranging from 0.003 $\mu$m to 100 $\mu$m, and the median pore diameter was 0.07 $\mu$m. The median pore diameter, pore surface area, and average particle size of the obtained EVOH1 are shown in Table 1.

<Production Example 2>

A pellet-like ethylenevinyl alcohol copolymer porous body (EVOH2) was obtained in the same manner as in Production Example 1, except that the ethylene content was 32% by mole.

The resulting EVOH2 pellets were flattened spherical pellets having an average particle size of 3.2 mm. The pellets of EVOH2 had pores with diameters ranging from 0.003 $\mu$m to 100 $\mu$m, and the median pore diameter was 0.11 $\mu$m.

The median pore diameter, pore surface area, and average particle size of the obtained EVOH2 are shown in Table 1.

<Production Example 3>

The ethylenevinyl alcohol copolymer (EVOH1) obtained in Production Example 1 was charged into a twin-screw extruder and pelletized at a resin temperature of 100°C at the discharge port. The amount of EVOH1 fed per unit time was 10 kg/hr. The specifications of the twin-screw extruder are shown below.

<Twin-screw extruder conditions>

L/D: 45.5
Bore diameter: 30 mm$\Phi$
Screw: Co-rotating fully intermeshing type
Rotation speed: 300 rpm
Die diameter: 3.0 mm$\Phi$
Number of die holes: 5

The obtained pellets were dried at 100°C for 15 hours using a fluidized bed dryer, and then dried at 100°C for 15 hours using a stationary dryer, thereby obtaining a pelletized ethylenevinyl alcohol copolymer (EVOH3).

The obtained pellets of EVOH3 were spherical with an average particle size of 2.9 mm, and observation under an electron microscope confirmed that EVOH3 had no pores. The average particle size of the obtained EVOH3 is shown in Table 1.

<Production Example 4>

A pellet-like ethylenevinyl alcohol copolymer porous body (EVOH4) was obtained in the same manner as in Production Example 1, except that the ethylene content was 27% by mole.

The resulting EVOH4 pellets were flattened spherical pellets having an average particle size of 3.2 mm. The pellets of EVOH4 had pores with diameters ranging from 0.003 $\mu$m to 100 $\mu$m, and the median pore diameter was 0.11 $\mu$m.

The median pore diameter, pore surface area, and average particle size of the obtained EVOH4 are shown in Table 1.

<Production Example 5>

A pellet-like ethylenevinyl alcohol copolymer porous body (EVOH5) was obtained in the same manner as in Production Example 1, except that the ethylene content was 15% by mole.

The resulting EVOH5 pellets were flattened spherical pellets having an average particle size of 3.2 mm. The pellets of EVOH5 had pores with diameters ranging from 0.003 $\mu$m to 100 $\mu$m, and the median pore diameter was 0.05 $\mu$m.

The median pore diameter, pore surface area, and average particle size of the obtained EVOH5 are shown in Table 1.

<Production Example 6>

The ethylenevinyl alcohol copolymer (EVOH3) obtained in Production Example 3 was pulverized using a Supermass Collider MKCA6-5 at a clearance of 100 $\mu$m and a rotation speed of 1800 rpm, thereby obtaining EVOH6. The obtained EVOH6 was observed under an electron microscope, and as a result, it was confirmed that the EVOH6 had no pores. The average particle size of the obtained EVOH6 is shown in Table 1.

<Example 1>

(Synthesis of Acetalization Product of Ethylenevinyl Alcohol Copolymer)

The EVOH porous body (EVOH2) in an amount of 100 parts by mass obtained in Production Example 2 was dispersed in 377 parts by mass of water, and 29.7 parts by mass of isobutyraldehyde was added thereto. The obtained dispersion liquid was heated to 60°C with stirring. Stirring was continued for 5 hours to allow the ethylenevinyl alcohol copolymer to be impregnated with isobutyraldehyde. Next, 10 parts by mass of 1M hydrochloric acid was added to the dispersion liquid at 60°C, thereby carrying out an acetalization reaction. Two hours after the first addition of hydrochloric acid, 20 parts by mass of 1M hydrochloric acid was added, and the acetalization reaction was carried out for a further 12 hours (14 hours in total). The acetalization product produced by the acetalization was in a solid state. Thereafter, 75 parts by mass of 1M sodium hydroxide was added to the dispersion liquid for neutralization, thereby terminating the acetalization reaction. To neutralize the acetalization product to the interior of the solid, the dispersion liquid was further stirred at 60°C for 8 hours. The neutralized acetalization product was collected by filtration, and 500 parts by mass of ion-exchanged water was added to the acetalization product, followed by stirring at 60°C for 6 hours, thereby washing the acetalization product. Again, the neutralized acetalization product was collected by filtration, and 500 parts by mass of ion-exchanged water was added to the acetalization product, followed by stirring at 60°C for 6 hours, thereby carrying out the second washing of the acetalization product. The washing water was removed by filtration, followed by vacuum drying at 60°C for 8 hours, thereby obtaining 113 parts by mass (yield: 100%) of an acetalization product of ethylenevinyl alcohol copolymer (A-1) in the form of pellets. The obtained acetalization product of EVOH was a porous body having the same pore structure as that of the raw material EVOH2.

The acetalization product of EVOH obtained above was extruded into a film using a film-forming machine consisting of a 40φ extruder (PLABOR GT-40-A manufactured by Research Laboratory of Plastics Technology Co., Ltd.) and a T-die under the following extrusion conditions, thereby obtaining a single-layer resin film having a thickness of 20 μm.

Type: Single screw extruder (non-vent type)
L/D: 24
Bore diameter: 40 mmΦ
Screw: Single-thread full-flight type, surface-nitrided steel
Screw rotation speed: 40 rpm
Die: 550-mm wide coat hanger die
Lip gap: 0.3 mm
Cylinder, die temperature setting C1/C2/C3/adapter/die = 180/200/210/210/210 (°C)

The physical properties of the obtained resin film were evaluated.

<Examples 2 to 7>

Pellet-shaped acetalization products of ethylenevinyl alcohol copolymer (A-2) to (A-7) were obtained in the same manner as in Example 1, except that the type of ethylenevinyl alcohol copolymer and the acetalization reaction conditions were changed as shown in Table 1. Each of the resulting acetalization products of ethylenevinyl alcohol copolymer (A-2) to (A-6) was a porous body having the same pore structure as the ethylenevinyl alcohol copolymer used as the raw material. Using each acetalization product of ethylenevinyl alcohol copolymer thus obtained, a melt-kneaded product and a resin film were obtained in the same manner as in Example 1.

<Comparative Examples 1, 3, and 4>

Pellet-shaped acetalization products of ethylenevinyl alcohol copolymer (B-1), (B-3), and (B-4) were obtained in the same manner as in Example 1, except that the type of ethylenevinyl alcohol copolymer and the acetalization reaction conditions were changed as shown in Table 1. Using each acetalization product of EVOH thus obtained, a melt-kneaded product and a resin film were obtained in the same manner as in Example 1.

<Comparative Example 2>

The EVOH porous body (EVOH1) in an amount of 100 parts by mass obtained in Production Example 1 was dispersed in a mixed solvent of 500 parts by mass of methanol and 50 parts by mass of ion-exchanged water. Next, 40 parts by mass of 1M hydrochloric acid was added, and the temperature of the resulting dispersion liquid was raised to 60°C with stirring, thereby completely dissolving the EVOH1 pellets. To the resulting solution, 16.7 parts by mass of isobutyraldehyde was added and mixed to make it uniform, and then the temperature was maintained at 60°C, thereby carrying out an acetalization reaction. After maintaining the reaction for 2 hours from the start of the reaction, 60 parts by mass of 1M sodium hydroxide was added for neutralization, thereby terminating the acetalization reaction. Thus, a reaction liquid containing an acetalization product of ethylenevinyl alcohol copolymer was obtained.

After adding 500 parts by mass of methanol to the neutralized reaction liquid, the resulting liquid was added dropwise to 2,000 parts by mass of ion-exchanged water, thereby precipitating an acetalization product of ethylenevinyl alcohol copolymer. The precipitated acetalization product was collected by filtration, dispersed in ion-exchanged water, and stirred at 23°C for 15 minutes for washing with water, and the acetalization product was collected by filtration again. This operation of washing with water and filtering was repeated two times again. This washing operation, from precipitation to washing with water and filtration, was considered as one set. Next, the acetalization product was dissolved in 1000 parts by mass of methanol, and another set of the washing operation was carried out. Vacuum drying was performed at 60°C for 8 hours, thereby obtaining an acetalization product of ethylenevinyl alcohol copolymer (B-2) after washing and vacuum drying. The acetalization product of ethylenevinyl alcohol copolymer (B-2) had 44% by mole of ethylene units and a degree of acetalization of 30% by mole.

Using the acetalization product of ethylenevinyl alcohol copolymer (B-2) thus obtained, a melt-kneaded product and a resin film were obtained in the same manner as in Example 1.

<Comparative Example 5>

A pellet-like acetalization product of ethylenevinyl alcohol copolymer (B-5) was obtained in the same manner as in Example 1, except that the type of ethylenevinyl alcohol copolymer and the acetalization reaction conditions were changed as shown in Table 1. The resulting acetalization product of ethylenevinyl alcohol copolymer was a porous body having the same pore structure as the ethylenevinyl alcohol copolymer serving as the raw material. Using the acetalization product of ethylenevinyl alcohol copolymer thus obtained, a melt-kneaded product and a resin film were obtained in the same manner as in Example 1.

<Comparative Examples 6 and 7>

Using EVOH1 and EVOH2 obtained in Production Examples 1 and 2, a melt-kneaded product and a resin film were obtained in the same manner as in Example 1.

<Comparative Example 8>

An acetalization product of ethylenevinyl alcohol copolymer (B-6) was obtained, and a melt-kneaded product and a resin film were obtained in the same manner as in Comparative Example 2, except that the amount of isobutyraldehyde was changed as shown in Table 1.

According to the above-mentioned methods, various physical properties of the resins and resin films obtained in Examples 1 to 7 and Comparative Examples 1 and 8 were evaluated. The results are shown in Table 1.

[Table 1]

Table 1

| | | Examples | | | | | | | Comparative Examples | | | | | | | |
|---|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 | 8 |
| Etheneviny 1 alcohol co-polymer (EVOH) | Type | EVOH2 | EVOH1 | EVOH1 | EVOH2 | EVOH2 | EVOH1 | EVOH6 | EVOH3 | EVOH1 | EVOH5 | EVOH4 | EVOH1 | EVOH2 | EVOH1 | EVOH1 |
| | Ethylene unit (mol%) | 32 | 44 | 44 | 32 | 32 | 44 | 44 | 44 | 44 | 15 | 27 | 44 | 3244 | 44 | 44 |
| | Vinyl alcohol unit (mol%) | 68 | 56 | 56 | 68 | 68 | 56 | 56 | 56 | 56 | 85 | 73 | 56 | 68 | 56 | 56 |
| | Median pore diameter (μm) | 0.11 | 0.07 | 0.07 | 0.11 | 0.11 | 0.07 | - | - | 0.07 | 0.05 | 0.11 | 0.07 | 0.11 | 0.07 | 0.07 |
| | Pore surface area (m$^2$/g) | 36 | 33 | 33 | 36 | 36 | 33 | - | - | 33 | 25 | 32 | 33 | 36 | 33 | 33 |
| | Average particle size (mm) | 3.2 | 3.2 | 3.2 | 3.2 | 3.2 | 3.2 | 0.2 | 2.9 | 3.2 | 3.2 | 3.2 | 3.2 | 3.2 | 3.2 | 3.2 |
| | 190°C, 2.16 kg MFR(g/10 min) | 1.6 | 5.5 | 5.5 | 1.6 | 1.6 | 5.5 | 5.5 | 5.5 | 5.5 | 1.5 | 8.0* | 5.5 | 1.6 | 5.5 | 5.5 |
| Acetalization reaction conditions | Raw resin (parts by weight) | 100 | 100 | 100 | 100 | 100 | 100 | 100 | 100 | 100 | 100 | 100 | 100 | - | - | 100 |
| | 1M Hydrochloric Acid (parts by weight): 1st | 10 | 10 | 10 | 10 | 10 | 10 | 10 | 10 | 40 | 10 | 40 | 10 | - | - | 40 |
| | 1 M Hydrochloric Acid (parts by weight): 2nd | 20 | 20 | 20 | 20 | - | - | - | 40 | - | 40 | - | 40 | - | - | - |
| | Isobutyraldehyde (parts by mass) | 29.7 | 13.9 | 8.3 | 22.1 | 25.5 | - | 27.3 | 16.7 | 16.7 | 25.3 | 3 | 23.3 | - | - | 8.3 |
| | n-Octylaldehyde (parts by mass) | - | - | - | - | - | 2.4 | - | - | - | - | - | - | - | - | - |
| | Aldehyde impregnation conditions | 60°C5h | 60°C5h | 60°C5h | 60°C5h | 60°C5h | 60°C5h | 60°C10h | 60°C2h | - | 60°C2h | 60°C2h | 60°C2h | - | - | - |

EP 4 606 825 A1

(continued)

|  | Examples | | | | | | | Comparative Examples | | | | | | | |
|---|---|---|---|---|---|---|---|---|---|---|---|---|---|---|---|
|  | 1 | 2 | 3 | 4 | 5 | 6 | 7 | 1 | 2 | 3 | 4 | 5 | 6 | 7 | 8 |
| 1M NaOH (parts by mass) | 75 | 75 | 75 | 75 | 75 | 75 | 15 | 75 | 60 | 75 | 75 | 75 | - | - | 60 |
| Reaction time (hours) | 2+12 | 2+10 | 2+6 | 2+10 | 16 | 8 | 33 | 2+6 | 2 | 2+6 | 8 | 2+6 | - | - | 2 |

(continued)

| | | Examples | | | | | | | Comparative Examples | | | | | | | |
|---|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 | 8 |
| Modified EVOH or EVOH | Type | (A-1) | (A-2) | (A-3) | (A-4) | (A-5) | (A-6) | (A-7) | (B-1) | (B-2) | (B-3) | (B-4) | (B-5) | - | - | (B-6) |
| | Degree of acetalization (mol%/PVA unit) | 43 | 25 | 15 | 32 | 33 | 5 | 32 | 30 | 30 | 30 | 2 | 42 | - | - | 15 |
| | Ethylene unit (mol%) | 32 | 44 | 44 | 32 | 32 | 44 | 44 | 44 | 44 | 15 | 27 | 44 | - | - | 44 |
| | Vinyl alcohol unit (mol%) | 39 | 39 | 48 | 46 | 46 | 53 | 38 | 39 | 39 | 60 | 71 | 32 | - | - | 48 |
| | Symmetry factor | 0.80 | 0.79 | 0.85 | 0.76 | 0.74 | 0.86 | 0.75 | 1.10 | 0.78 | 0.92 | 0.70 | 0.78 | - | - | 0.76 |
| | 190°C, 2.16 kg MFR (g/10 min) | 4.0 | 4.9 | 4.2 | 2.3 | 3.1 | 2.2 | 5.2 | 4.5 | 9.2 | 1.2 | 7.8* | 4.5 | - | - | 4.2 |
| | Tg (°C) | 50 | 48 | 47 | 55 | 55 | 52 | 41 | 47 | 47 | 55 | 59 | 42 | 60 | 53 | 50 |
| | Tm (°C) | 152 | 140 | 141 | 158 | 141 | 163 | 140 | 143 | 106 | 172 | 180 | 132 | 183 | 166 | 110 |
| | Tm/Tg (K/K) | 1.31 | 1.29 | 1.29 | 1.31 | 1.26 | 1.34 | 1.31 | 1.30 | 1.19 | 1.36 | 1.36 | 1.28 | 1.37 | 1.35 | 1.19 |
| | ΔH (J/g) | 20.5 | 34.14 | 42.9 | 31.77 | 28.8 | 56.9 | 32.2 | 44.2 | 27.9 | 59.2 | 74.2 | 20.91 | - | - | 30.9 |
| | Film-forming property | A | A | A | A | A | A | A | C | A | B | B | A | A | A | A |
| | Tensile modulus (MPa) | 1300 | 1570 | 1620 | 1500 | 1420 | 1800 | 1470 | 2100 | 1550 | 2200 | 2500 | 1350 | 2720 | 2550 | 1420 |
| | Tensile elongation at break (%) | 280 | 310 | 220 | 410 | 430 | 320 | 370 | 290 | 380 | 20 | 15 | 390 | 110 | 280 | 320 |
| | Haze (%) | 0.1 | 0.1 | 0.1 | 0.1 | 0.1 | 0.2 | 0.2 | 0.3 | 0.1 | 0.3 | 0.4 | 0.1 | 0.4 | 0.3 | 0.1 |
| | OTR (cc·20 μm/m²·day·atm) | 90.0 | 39.2 | 12.7 | 25.1 | 28.5 | 2.5 | 68 | 130.0 | 75.0 | 1.2 | 3.6 | 175.0 | 0.3 | 1.5 | 35.7 |
| | Stretchability | A | A | A | A | A | A | A | C | A | B | C | A- | C | C | A |
| | (ΔH·Tm·OH amount/100)/OT R | 38 | 140 | 671 | 251 | 192 | 5259 | 74 | 55 | 55 | 13172 | 6629 | 15 | - | - | 159 |

* Measured under conditions of 210°C and a load of 2160 g

<Example 8>

Using a Labo Plastomill, 25 parts by mass of an acetalization product of ethylenevinyl alcohol copolymer (A-1) and 75 parts by mass of an ethylenevinyl alcohol copolymer (EVOH2) were melt-kneaded at a chamber temperature of 210°C and a rotation speed of 90 rpm for 5 minutes. The contents of the chamber were taken out and cooled, thereby obtaining a composition.

Using the obtained composition, a resin film was obtained in the same manner as in Example 1.

<Examples 9 to 12 and Comparative Examples 9 to 10>

Compositions and resin films were obtained in the same manner as in Example 8, except that the resins used were changed as shown in Table 2.

According to the above-mentioned methods, various physical properties of the compositions and resin films obtained in Examples 8 to 12 and Comparative Examples 9 and 10 were evaluated. The results are shown in Table 2.

[Table 2]

Table 2

| | | Examples | | | | | Comparative Examples | |
|---|---|---|---|---|---|---|---|---|
| | | 8 | 9 | 10 | 11 | 12 | 9 | 10 |
| Formulation (% by mass) | Modified EVOH (A-1) | 25 | 50 | - | - | 10 | - | - |
| | Modified EVOH (A-2) | - | - | 25 | 70 | - | - | - |
| | Modified EVOH (B-1) | - | - | - | - | - | 25 | - |
| | Modified EVOH (B-2) | - | - | - | - | - | - | 25 |
| | Non-modified EVOH (EVOH2) | 75 | 50 | 75 | 30 | 90 | 75 | 75 |
| Evaluation | Film-forming property | A | A | A | A | A | C | A |
| | OTR (cc·20 $\mu$m/m$^2$·day·atm) | 0.4 | 40 | 1.1 | 38 | 0.2 | 2.3 | 1.8 |
| | Tensile modulus (MPa) | 1850 | 1700 | 1920 | 1680 | 1950 | 2510 | 2100 |
| | Tensile elongation at break (%) | 160 | 200 | 180 | 310 | 150 | 170 | 180 |
| | Haze (%) | 0.2 | 0.2 | 0.2 | 0.2 | 0.2 | 0.3 | 0.2 |
| | Tm (°C) | 183 | 183 | 183 | 181 | 183 | 183 | 183 |
| | Stretchability | A | A | A | A | A | C | B |

As shown in Tables 1 and 2, it was confirmed that the acetalization products and compositions obtained in Examples result in resin films that are excellent in all of the barrier properties, transparency, stretchability, flexibility, and heat resistance. Meanwhile, it was confirmed that the resins and compositions obtained in the Comparative Examples only result in resin films that are inferior in one or more of the barrier properties, transparency, stretchability, flexibility, and heat resistance.

Thus, the acetalization product of ethylenevinyl alcohol copolymer and composition of the present invention can form a resin film that is excellent in all of the barrier properties, transparency, stretchability, flexibility, and heat resistance.

## Claims

1.  An acetalization product of ethylenevinyl alcohol copolymer, comprising:

   an ethylene unit at from 20% to 80% by mole; and
   a vinyl alcohol unit at from 4% to 76% by mole,
   with reference to all monomeric units constituting the acetalization product,
   the acetalization product having a degree of acetalization of from 3% to 80% by mole, satisfying

Formula (1):

$$0.71 \leq W_{0.05h}/2f \leq 1.09 \quad (1)$$

[in Formula (1), $W_{0.05h}/2f$ represents a symmetry factor determined by reversed-phase partition gradient high-performance liquid chromatography analysis using a water-ethanol eluant in accordance with JIS K 0124: 2011] and

Formula (2):

$$1.20 \leq Tm/Tg \leq 1.35 \quad (2)$$

[in Formula (2), Tm and Tg represent a melting peak temperature (Kelvin) and a midpoint glass transition temperature (Kelvin), respectively, measured in accordance with JIS K7121: 2012], and having an oxygen permeation rate of 150 cc·20 $\mu$m/m²·day·atm or less at 20°C and 65%RH.

2. The acetalization product according to claim 1, wherein the acetalization product satisfies Formula (3): {$\Delta$H (J/g) $\times$ Tm (Kelvin) $\times$ Vinyl alcohol unit amount (mol%)/100}/(Oxygen transmission rate at 20°C and 65%RH) $\geq$ 30 (3).

3. The acetalization product according to claim 1 or 2, wherein the acetalization product has a degree of acetalization of 40% by mole or less.

4. The acetalization product according to any one of claims 1 to 3, wherein the acetalization product has a melting peak temperature Tm measured in accordance with JIS K7121: 2012 of 136°C or more.

5. The acetalization product according to any one of claims 1 to 4, wherein the acetalization product has a tensile modulus measured at 23°C and 50%RH of 2000 MPa or less.

6. A composition comprising:

   (A) the acetalization product according to any one of claims 1 to 5; and
   (B) one or more resins selected from the group consisting of (B-1) an acetalization product of ethylenevinyl alcohol copolymer other than (A), (B-2) an ethylenevinyl alcohol copolymer, and (B-3) a resin other than (B-1) and (B-2).

7. A method of producing the acetalization product according to any one of claims 1 to 5, comprising:

   (i) a step of preparing a dispersion liquid containing an ethylenevinyl alcohol copolymer, an aldehyde, and a solvent and impregnating at least a portion of the aldehyde into the ethylenevinyl alcohol copolymer; and
   (ii) a step of adding a catalyst to the dispersion liquid, thereby acetalizing the ethylenevinyl alcohol copolymer after step (i),

   wherein the acetalization is carried out by a solid-liquid reaction.

8. A resin film comprising one or more layers containing the acetalization product according to any one of claims 1 to 5.

9. A resin film comprising one or more layers containing the composition according to claim 6.

10. The resin film according to claim 8, further comprising one or more layers containing one or more resins selected from the group consisting of a polyolefin, a polyamide, a polyester, and a polyurethane.

11. The resin film according to claim 9, further comprising one or more layers containing one or more resins selected from the group consisting of a polyolefin, a polyamide, a polyester, and a polyurethane.

12. A barrier material comprising the resin film according to any one of claims 8 to 11.

13. A molded body comprising the resin film according to any one of claims 8 to 11.

[Figure 1]

## INTERNATIONAL SEARCH REPORT

| International application No. |
|---|
| **PCT/JP2023/036889** |

**A.     CLASSIFICATION OF SUBJECT MATTER**

*C08F 8/28*(2006.01)i; *C08J 5/18*(2006.01)i; *C08L 29/14*(2006.01)i
FI:   C08F8/28; C08L29/14; C08J5/18 CEX

According to International Patent Classification (IPC) or to both national classification and IPC

**B.     FIELDS SEARCHED**

Minimum documentation searched (classification system followed by classification symbols)

C08F8/28; C08J5/18; C08L29/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | JP 64-074201 A (KURARAY CO., LTD.) 20 March 1989 (1989-03-20)<br>claims, page 2, upper right column, line 20 to lower left column, line 17, page 3, upper right column, lines 3-6, examples | 1-6, 8-13 |
| A | JP 2003-534413 A (CHEVRON PHILLIPS CHEMICAL COMPANY LP) 18 November 2003 (2003-11-18)<br>claims, examples | 1-13 |
| A | JP 05-086240 A (KURARAY CO., LTD.) 06 April 1993 (1993-04-06)<br>claims, examples | 1-13 |
| A | WO 2021/145137 A1 (KURARAY CO., LTD.) 22 July 2021 (2021-07-22)<br>claims, examples | 1-13 |
| P, A | WO 2022/220085 A1 (KURARAY CO., LTD.) 20 October 2022 (2022-10-20)<br>claims, examples | 1-13 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/036889**

| Patent document cited in search report | | | Publication date (day/month/year) | Patent family member(s) | | | Publication date (day/month/year) |
|---|---|---|---|---|---|---|---|
| JP | 64-074201 | A | 20 March 1989 | (Family: none) | | | |
| JP | 2003-534413 | A | 18 November 2003 | US claims, examples WO EP CN | 2002/0022144 2001/090202 1285008 1430627 | A1 A2 A2 A | |
| JP | 05-086240 | A | 06 April 1993 | (Family: none) | | | |
| WO | 2021/145137 | A1 | 22 July 2021 | US claims, examples EP CN | 2023/0069427 4092003 114981318 | A1 A1 A | |
| WO | 2022/220085 | A1 | 20 October 2022 | TW | 202307025 | A | |

Form PCT/ISA/210 (patent family annex) (January 2015)

**EP 4 606 825 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022166255 A
- JP 2006233222 A
- JP 55046642 B
- JP 11293077 A
- JP 2002121290 A